(19) Europäisches Patentamt
European Patent Office
Office européen des brevets

(11) EP 4 552 737 A1

(12) # EUROPEAN PATENT APPLICATION
published in accordance with Art. 153(4) EPC

(43) Date of publication:
**14.05.2025 Bulletin 2025/20**

(21) Application number: **23835450.0**

(22) Date of filing: **30.06.2023**

(51) International Patent Classification (IPC):
***B01J 23/63*** (2006.01) ***B01J 23/34*** (2006.01)
***B01J 23/42*** (2006.01) ***B01J 23/44*** (2006.01)
***B01J 23/46*** (2006.01) ***B01J 23/648*** (2006.01)
***B01J 23/652*** (2006.01) ***B01J 23/656*** (2006.01)
***B01J 23/755*** (2006.01) ***B01J 23/888*** (2006.01)
***B01J 23/889*** (2006.01) ***B01J 23/89*** (2006.01)
***C01C 1/04*** (2006.01)

(52) Cooperative Patent Classification (CPC):
**B01J 23/34; B01J 23/42; B01J 23/44; B01J 23/46; B01J 23/63; B01J 23/648; B01J 23/652; B01J 23/656; B01J 23/755; B01J 23/888; B01J 23/889; B01J 23/89; C01C 1/04;** Y02P 20/52

(86) International application number:
**PCT/JP2023/024491**

(87) International publication number:
**WO 2024/009918 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.07.2022 JP 2022107476**

(71) Applicant: **ENEOS Corporation**
**Chiyoda-ku**
**Tokyo 100-8162 (JP)**

(72) Inventors:
- **YAYAMA, Yoshihiro**
**Tokyo 100-8162 (JP)**
- **UGAJIN, Takuya**
**Tokyo 100-8162 (JP)**

(74) Representative: **Gilani, Anwar**
**Venner Shipley LLP**
**406 Science Park**
**Milton Road**
**Cambridge CB4 0WW (GB)**

(54) **AMMONIA SYNTHESIS CATALYST AND AMMONIA SYNTHESIS METHOD**

(57) An ammonia synthesis catalyst according to the present invention includes one or more kinds of components selected from a group consisting of IrSc, $FePd_3$, $MnTc_3$, IrY, $CrPd_3$, $MnPd_3$, RhY, $Co_3Pt$, $CrPt_3$, $FeRh_3$, $CrRh_3$, $Ni_3Ti$, $Ir_3V$, $Pt_3Ti$, $Co_3Rh$, $Pd_3Ti$, $Ni_3Zr$, $Co_3W$, $NiPd_3$, $FeNi_3$, $Ir_3Mn$, IrMn, MnPt, $MnNi_3$, $Ir_3Re$, MnRh, $Pd_3V$, $MnPt_3$, $Rh_3V$, and $Rh_3Ti$.

EP 4 552 737 A1

FIG.19

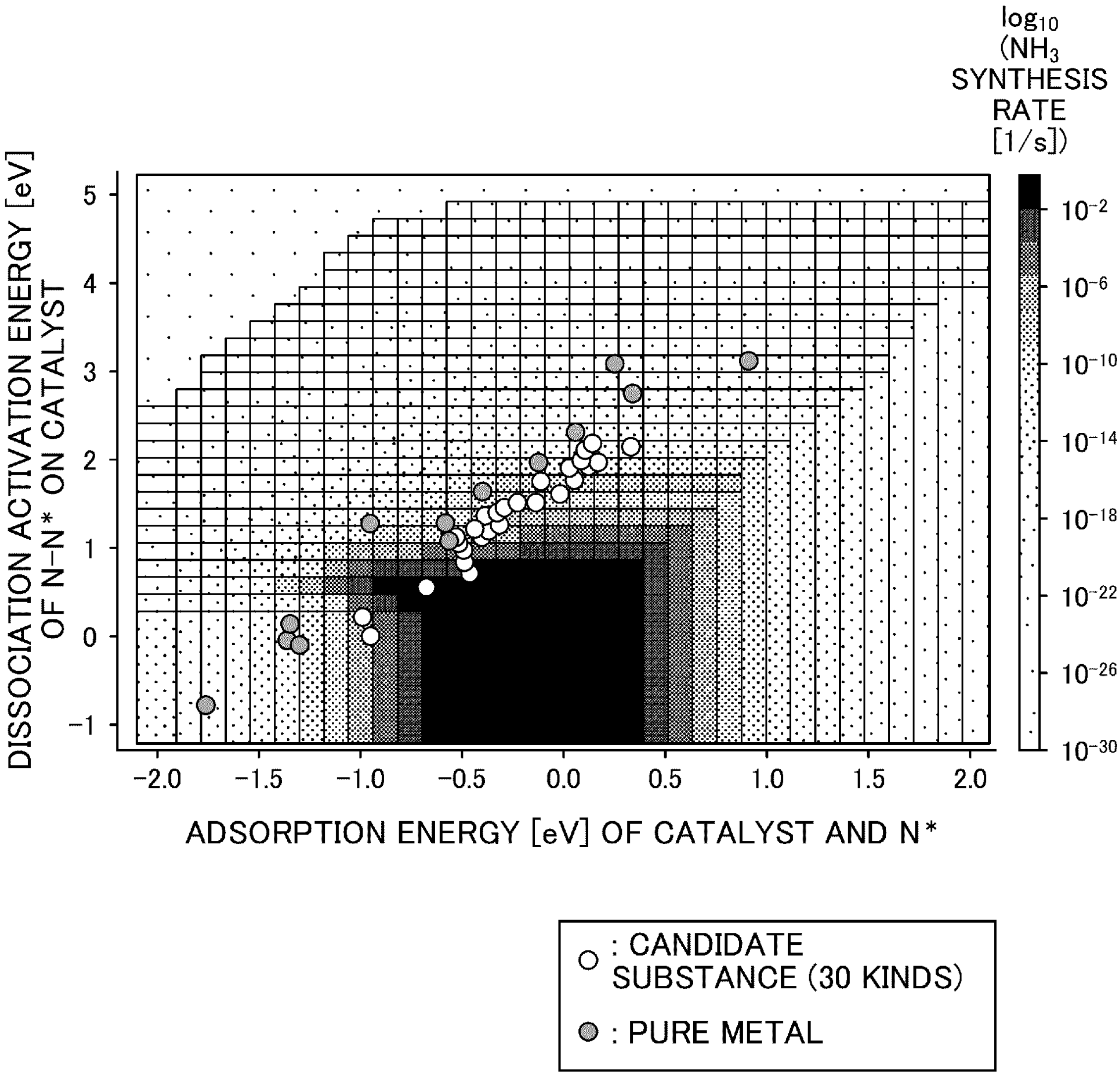
log10 (NH3 SYNTHESIS RATE [1/s])
10-2
10-6
10-10
10-14
10-18
10-22
10-26
10-30
DISSOCIATION ACTIVATION ENERGY [eV] OF N-N* ON CATALYST
5
4
3
2
1
0
−1
−2.0
−1.5
−1.0
−0.5
0.0
0.5
1.0
1.5
2.0
ADSORPTION ENERGY [eV] OF CATALYST AND N*
○ : CANDIDATE SUBSTANCE (30 KINDS)
● : PURE METAL

## Description

TECHNICAL FIELD

The present disclosure relates to ammonia synthesis catalysts and ammonia synthesis methods.

BACKGROUND ART

In recent years, ammonia ($NH_3$) is attracting attention as a component applicable for use as an energy carrier for hydrogen energy or the like. As a method for synthesizing the ammonia, the Haber-Bosch (HB) process using an iron-based catalyst is industrially used as the catalyst. Recently, various kinds of ammonia synthesis catalysts are being studied for the purpose of synthesizing the ammonia under conditions that are milder than the conditions in which the HB process is performed.

For example, there is a disclosed ammonia synthesis catalyst carrying ruthenium in layers on a praseodymium oxide carrier (for example, refer to Patent Document 1).

PRIOR ART DOCUMENTS

PATENT DOCUMENTS

Patent Document 1: Japanese Laid-Open Patent Publication No. 2016-155123

DISCLOSURE OF THE INVENTION

PROBLEM TO BE SOLVED BY THE INVENTION

When synthesizing the $NH_3$ using the HB process, the synthesis of the $NH_3$ is performed under high temperature and high pressure conditions, and thus, from a viewpoint of reducing $CO_2$ emissions and improving energy efficiency when synthesizing the $NH_3$, there are demands for a $NH_3$ synthesis catalyst which can more efficiently synthesize the $NH_3$.

One object of one aspect of the present invention is to provide an ammonia synthesis catalyst which can more efficiently synthesize $NH_3$.

MEANS OF SOLVING THE PROBLEM

One aspect of the present invention relates to an ammonia synthesis catalyst including one or more kinds of components selected from a group consisting of IrSc, $FePd_3$, $MnTc_3$, IrY, $CrPd_3$, $MnPd_3$, RhY, $Co_3Pt$, $CrPt_3$, $FeRh_3$, $CrRh_3$, $Ni_3Ti$, $Ir_3V$, $Pt_3Ti$, $Co_3Rh$, $Pd_3Ti$, $Ni_3Zr$, $Co_3W$, $NiPd_3$, $FeNi_3$, $Ir_3Mn$, IrMn, MnPt, $MnNi_3$, $Ir_3Re$, MnRh, $Pd_3V$, $MnPt_3$, $Rh_3V$, and $Rh_3Ti$.

EFFECTS OF THE INVENTION

According to one aspect of the present invention, it is possible to efficiently synthesize $NH_3$.

BRIEF DESCRIPTION OF THE DRAWINGS

[FIG. 1] FIG. 1 is a diagram illustrating a configuration of a catalyst selection system to which a method for selecting a catalyst is applied.
[FIG. 2] FIG. 2 is a diagram illustrating an example of a data table.
[FIG. 3] FIG. 3 is a diagram illustrating an example of a relationship of energy levels in each of elementary reactions in $NH_3$ synthesis using the catalyst.
[FIG. 4] FIG. 4 is a functional block diagram illustrating a configuration of a catalyst selection device.
[FIG. 5] FIG. 5 is a diagram illustrating an example of an activity map.
[FIG. 6] FIG. 6 is a graph illustrating an example of a relationship between an interface and a synthesis rate of $NH_3$ for a case where the catalyst is iron.
[FIG. 7] FIG. 7 is a functional block diagram illustrating an example of a configuration of a first calculation unit.
[FIG. 8] FIG. 8 is a diagram for explaining sorting of candidate substances in the data table.

[FIG. 9] FIG. 9 is a functional block diagram illustrating an example of a configuration of a second calculation unit.

[FIG. 10] FIG. 10 is a block diagram illustrating a hardware configuration of the catalyst selection device.

[FIG. 11] FIG. 11 is a flow chart illustrating the method for selecting the catalyst.

[FIG. 12] FIG. 12 is a diagram illustrating an example of the activity map illustrating a relationship between an adsorption energy of an intermediate of nitrogen, and a dissociation activation energy of a transition state of the nitrogen on the catalyst.

[FIG. 13] FIG. 13 is a flow chart illustrating an example of a first energy calculating step.

[FIG. 14] FIG. 14 is a diagram illustrating an example of a result of plotting the descriptors of the candidate substance.

[FIG. 15] FIG. 15 is a flow chart illustrating an example of a second energy calculating step.

[FIG. 16] FIG. 16 is a diagram illustrating an example of the activity map in which 30 kinds of second screened candidate substances are plotted.

[FIG. 17] FIG. 17 is a diagram illustrating a correlation between an energy of an intermediate or transition state of a standard catalyst calculated by DFT calculation and an energy of the intermediate or transition state of the standard catalyst, which is the same as the standard catalyst on the abscissa, calculated by the method for selecting the catalyst according to the embodiment of the present invention.

[FIG. 18] FIG. 18 is a diagram illustrating a comparison between activity maps of the catalyst selected by the catalyst selection method and the catalyst created by DFT calculation.

[FIG. 19] FIG. 19 is a diagram illustrating an example of a state in which 30 kinds of alloys selected by the method for selecting the catalyst are plotted on the activity map created using the method for selecting the catalyst.

[FIG. 20] FIG. 20 is a flow chart illustrating an example of a method for producing the catalyst.

[FIG. 21] FIG. 21 is a diagram in which a relationship between a Rh ratio and an energy is plotted for 2310 types of structures of a CrRh alloy.

[FIG. 22] FIG. 22 is a diagram in which a relationship between a Mn ratio and the energy is plotted for 2310 types of structures of a IrMn alloy.

[FIG. 23] FIG. 23 is a diagram illustrating a relationship between an adsorption energy ($E_N$) of the catalyst and an intermediate (N*) of nitrogen in a candidate catalyst and a reference catalyst, and a calculation result of a synthesis rate of $NH_3$ using the candidate catalyst and the reference catalyst.

[FIG. 24] FIG. 24 is a diagram illustrating an experimental result of the adsorption energy ($E_N$) of the catalyst and the intermediate (N*) of nitrogen, and the synthesis rate of $NH_3$, for the reference catalyst.

## MODE OF CARRYING OUT THE INVENTION

Hereinafter, embodiments of the present invention will be described in detail. In order to facilitate understanding of the description, the same constituent elements are designated by the same reference numerals in the drawings, and a redundant description of the same constituent elements will be omitted. In addition, in the present specification, when "to" is used to indicate a numerical range, the numerical range includes numerical values indicated before and after the "to" as a lower limit value and an upper limit value of the numerical range, unless indicated otherwise.

### <$NH_3$ Synthesis Catalyst>

A $NH_3$ synthesis catalyst according to the embodiments of the present invention will be described. The $NH_3$ synthesis catalyst according to the present embodiment includes at least one or more kinds of components selected from IrSc, $FePd_3$, $MnTc_3$, IrY, $CrPd_3$, $MnPd_3$, RhY, $Co_3Pt$, $CrPt_3$, $FeRh_3$, $CrRh_3$, $Ni_3Ti$, $Ir_3V$, $Pt_3Ti$, $Co_3Rh$, $Pd_3Ti$, $Ni_3Zr$, $Co_3W$, $NiPd_3$, $FeNi_3$, $Ir_3Mn$, IrMn, MnPt, $MnNi_3$, $Ir_3Re$, MnRh, $Pd_3V$, $MnPt_3$, $Rh_3V$, and $Rh_3Ti$. A single component or a plurality of components, among these components, may be included in the catalyst.

The $NH_3$ synthesis catalysts according to the present embodiment preferably includes one kind of component selected from IrSc, $FePd_3$, $MnTc_3$, IrY, $CrPd_3$, $MnPd_3$, RhY, $Co_3Pt$, $CrPt_3$, $FeRh_3$, $CrRh_3$, $Ni_3Ti$, $Ir_3V$, $Pt_3Ti$, $Co_3Rh$, $Pd_3Ti$, $Ni_3Zr$, $Co_3W$, $NiPd_3$, $FeNi_3$, $Ir_3Mn$, IrMn, MnPt, $MnNi_3$, $Ir_3Re$, MnRh, $Pd_3V$, $MnPt_3$, $Rh_3V$, and $Rh_3Ti$.

The $NH_3$ synthesis catalyst according to the present embodiment is selected by a catalyst selection system and a method for selecting the catalyst, which will be described later. Because the catalyst selection system or the like uses a descriptor that is selected by analyzing elementary reactions of the $NH_3$ synthesis, it is possible to efficiently and accurately select the catalyst which reduces the activation energy. For this reason, by using the catalyst selected by the catalyst selection system or the like for the $NH_3$ synthesis, the energy required for the $NH_3$ synthesis can be reduced, and the $NH_3$ can be synthesized efficiently.

The $NH_3$ is attracting attention as one of the most promising candidates for the hydrogen carrier. Because the $NH_3$ is generally synthesized by the HB process which is performed at the high temperature and high pressure conditions, from the viewpoint of reducing $CO_2$ emissions and improving the energy efficiency, it is important to use a $NH_3$ synthesis catalyst capable of efficiently synthesizing the $NH_3$ in order to produce the $NH_3$ with a good production efficiency. The $NH_3$

synthesis catalyst according to the present embodiment can efficiently synthesize the $NH_3$, and can thus improve the production of the $NH_3$.

<Catalyst Selection System>

FIG. 1 is a diagram illustrating a configuration of the catalyst selection system to which the method for selecting the catalyst is applied. As illustrated in FIG. 1, a catalyst selection system 1 includes a catalyst selection device 10, a storage device 20, and a machine learning potential 30. In the catalyst selection system 1, the catalyst selection device 10, the storage device 20, and the machine learning potential 30 may be connected via a communication network 40, and input values to the catalyst selection device 10, the storage device 20, and the machine learning potential 30, and output values of the catalyst selection device 10, the storage device 20, and the machine learning potential 30 may be transmitted via the communication network 40. At least one of the storage device 20 and the machine learning potential 30 may be stored in a cloud system.

In the present embodiment, the catalyst selection device 10, the storage device 20, and the machine learning potential 30 are connected via the communication network 40, but a wired connection may be employed instead. In addition, the catalyst selection system 1 may be a single apparatus, such as a personal computer (PC) or the like, including each component within the apparatus.

The catalyst selection device 10 selects candidates for the $NH_3$ synthesis catalyst to be used for a catalytic reaction for synthesizing the $NH_3$, which is the target product, from the $H_2$ and the $N_2$, which are the raw materials, using the machine learning potential 30. Details of the catalyst selection device 10 will be described later.

The storage device 20 stores a data table including information on the catalyst, an adsorbent, or the like, structures and energies of the catalyst and the adsorbent optimized using the machine learning potential 30, and a deviation or the like from a scaling line.

An example of the data table is illustrated in FIG. 2. As illustrated in FIG. 2, the data table records the information on the catalyst, the adsorbent, or the like, the structure and energy of the catalyst and the adsorbent optimized using the machine learning potential 30, and information on the deviation or the like from the scaling line.

The deviation from the scaling line is a difference in the dissociation activation energy of N-N* between coordinates of the energy optimized using the machine learning potential 30 (coordinates of an adsorption energy of N* and the dissociation activation energy of N-N*) and coordinates of the adsorption energy of N* on the scaling line, for the same catalyst composition and the same crystal plane. For this reason, the deviation from the scaling line is calculated only for the dissociation activation energy of N-N*.

The catalyst may be a single metal or the like, an alloy including a plurality of metals, or a compound including a metal.

Examples of the information on the catalyst include a catalyst name (catalyst composition), information on the crystal plane of the catalyst, or the like.

Examples of the catalyst name include CoRh or the like, for example.

Examples of the crystal plane of the catalyst include [001], [111], [211], or the like, for example.

The adsorbent is a component used for producing the target product, and is nitrogen ($N_2$) and hydrogen ($H_2$).

Examples of the information on the adsorbent include a name of the adsorbent or the like.

Examples of the name of the adsorbent include no adsorbent, N*, N-N*, or the like.

Examples of the optimized structures of the catalyst and adsorbent include an intermediate structure, a transition state structure, or the like of the substance.

Energies of the optimized catalyst and adsorbent include an energy of the catalytic reaction or the like. Examples of the energy of the catalytic reaction include energies of reactants that are generated in a plurality of elementary reactions in the process of synthesizing the target product $NH_3$ from the raw materials $H_2$ and $N_2$ in the catalytic reaction. The reactants include the raw materials, the intermediates of the raw materials, transition states of the intermediates, or the like. Examples of the energy of the reactant include a dissociation activation energy of the transition state of the intermediate of the raw materials generated by the elementary reactions in the process of synthesizing the target product from the raw materials on the catalyst, an adsorption energy of the intermediate on the catalyst, or the like.

The elementary reactions of the $NH_3$ synthesis include the following formulas (I) to (VII), for example. In the formulas, "*" denotes an empty adsorption site on a surface of the catalyst on which the reactant, such as an element, a molecule, or the like included in the raw materials, is adsorbed. In the formulas (I) to (VII), the raw materials are $N_2$ and $H_2$, the intermediates of the raw materials are $N_2$*, H*, H*, $NH_2$*, and $NH_3$*, and the transition states of the intermediates are N-N*, N-H*, NH-H*, and $NH_2$-H*.

$N_2$(g)+* -> $N_2$* --- (I)

$H_2$(g)+2* -> 2H* --- (II)

$N_2$*+* -> N-N*+* -> 2N* --- (III)

N*+H* -> N-H*+* -> NH*+* --- (IV)

NH*+H* -> NH-H*+*$_h$ -> $NH_2$*+* --- (V)

$NH_2$*+H* -> $NH_2$-H*+* -> $NH_3$*+* - - - (VI)

$NH_3$* <=> $NH_3$(g)* - - - (VII)

FIG. 3 illustrates an example of a relationship of energy levels in each of the elementary reactions of $NH_3$ synthesis using the catalysts in these formulas. As illustrated in FIG. 3, in the process of synthesizing the target product $NH_3$ from the raw materials $H_2$ and $N_2$, a dissociation activation energy ($E_{N-N}$) of N-N*, which is the transition state of nitrogen on the catalyst, is the largest, and the adsorption energy ($E_N$) of the intermediate N* of nitrogen on the catalyst is substantially constant and most stable in the formula (III) among the formulas (I) to (VII) described above. Among the formulas described above, the dissociation activation energy ($E_{N-N}$) of N-N* on the catalyst and the adsorption energy ($E_N$) of N* on the catalyst greatly affect the $NH_3$ synthesis, and can thus be suitably used as descriptors.

The machine learning potential 30 is an interatomic potential which outputs an energy from information related to an atomic structure, using a machine learning method. Examples of the machine learning potential include a neural network potential (NNP), a Gaussian approximation potential (GAP), a spectral neighbor analysis potential (SNAP), a moment tensor potential (MTP), or the like. Among these machine learning potentials, the NNP is preferable from a viewpoint of a high flexibility of the neural network. Matlantis (registered trademark) may be used for the NNP.

[Catalyst Selection Device]

FIG. 4 is a functional block diagram illustrating a configuration of the catalyst selection device 10. As illustrated in FIG. 4, the catalyst selection device 10 includes a descriptor selection unit 11, a map creation unit 12, a preparation unit 13, a first calculation unit 14, a first plotting unit 15, a first screening unit 16, a second calculation unit 17, a second plotting unit 18, a second screening unit 19, a filtering unit 21, and an output unit 22.

The descriptor selection unit 11 selects, as the descriptor, the energy of an intermediate structure or a transition state structure included in the elementary reactions of the catalytic reaction expressed by the formulas (I) to (VII) described above.

The map creation unit 12 creates a map (activity map) representing the descriptors and a reactivity of the catalytic reaction. A map representing the descriptors and a selectivity of catalytic reaction may be created in place of the activity map.

In addition, because the relationship between the descriptor and the reactivity (selectivity) of the catalyst becomes clear from the activity map, the activity map may be regarded as a model for predicting the reactivity (selectivity) of the catalyst when the descriptors are input, and the reactivity of the catalyst may be predicted directly from the descriptors. By regarding the activity map as a model, the reactivity of the catalyst may be predicted directly from the descriptors obtained by the first calculation unit 14 and the second calculation unit 17, and the candidate substance may be screened according to the reactivity using a data table (refer to FIG. 8). In this case, the catalyst selection device 10 does not require the first plotting unit 15 and the second plotting unit 18.

An example of the activity map is illustrated in FIG. 5. FIG. 5 represents a relationship between two descriptors of the elementary reactions of the reactants in the $NH_3$ synthesis (refer to the formulas (I) to (VII) described above) and a synthesis rate of the $NH_3$ ($NH_3$ synthesis rate). The $NH_3$ synthesis rate in FIG. 5 represents a yield of the $NH_3$ that is synthesized. The two descriptors used in the activity map illustrated in FIG. 5 will be referred to as descriptors 1 and 2. As described above, among the formulas (I) to (VII), the dissociation activation energy ($E_{N-N}$) of the transition state (N-N*) of the intermediate of the nitrogen on the catalyst, and the adsorption energy ($E_N$) of the intermediate (N*) of nitrogen on the catalyst greatly affect the $NH_3$ synthesis. For this reason, the descriptors 1 and 2 preferably use the adsorption energy ($E_N$) of N* on the catalyst and the dissociation activation energy ($E_{N-N}$) of N-N* on the catalyst.

The activity map can be created by microkinetics using the descriptors, for example. In the present embodiment, because the catalyst is the $NH_3$ synthesis catalyst, and a $NH_3$ synthesis reaction is generated, it is preferable, as described above, to use the energies of N* and N-N* in the formulas of the elementary reactions (refer to the formulas (I) to (VII) described above) of the reactants in the $NH_3$ synthesis, as the descriptors. When the energies of N* and N-N* are used as the descriptors, a linear relationship among a plurality of catalysts can be expressed based on levels of reaction rates of the catalysts, and thus, it is possible to obtain a map in which a region having a high activity can be visually understood with ease based on the levels of the reaction rates. A straight line indicated on the activity map can be used as a scaling line (refer to FIG. 5) which serves as a threshold value of the reaction rates of the catalysts, as will be described later.

A general microkinetics will be described, before describing the microkinetics using the descriptors. The general microkinetics include the following enumeration of elementary reactions, energy calculation, and reaction rate calculation.

1. Enumeration of Elementary Reactions:
All elementary reactions related to the $NH_3$ synthesis are enumerated.
2. Energy Calculation:
The energy of all of the intermediates and transition states included in the enumerated elementary reactions, on the surface of a specific catalyst (for example, the (111) plane of the catalyst) are calculated by the machine learning potential 30.
3. Reaction Rate Calculation:
The calculated energy is converted into a reaction rate formula, and the reaction rate of each elementary reaction obtained in the "1. Enumeration of Elementary Reactions:" described above is obtained by solving simultaneous ordinary differential equations. Then, the rate of "NH3* <=> $NH_3$(g)*" in the formula (VII) of the elementary reactions related to the $NH_3$ synthesis is output, so as to obtain a $NH_3$ synthesis rate on the surface of the catalyst (for example, the (111) plane of the catalyst).

Next, the microkinetics using the descriptors will be described. A procedure for performing the microkinetics using the descriptors is as follows.

1. Preparation:

1-1. All elementary reactions related to the $NH_3$ synthesis are described.
1-2. All intermediates and transition states generated in the elementary reactions related to the $NH_3$ synthesis are calculated. For example, for some standard catalysts, all intermediates and transition states are calculated. That is, all intermediates and transition states that are generated when these standard catalysts are used are calculated. Then, only two reactants (for example, the intermediate or the transition state) used for the descriptors are selected from all of the intermediates and transition states, and two descriptors (for example, the adsorption energy of N* and the dissociation activation energy of N-N*) are calculated. Other parameters (for example, the energy of the intermediate, the energy of the transition state) are acquired by a linear regression from the descriptors.

2. Creating Activity Map:
When the values of the two descriptors are determined, the energies of all of the intermediates and transition states included in all of the enumerated elementary reactions can be obtained from the linear regression, and the $NH_3$ synthesis rate can be obtained by the general microkinetics of the "3. Reaction Rate Calculation:" of the microkinetics described above. By calculating the $NH_3$ synthesis rate while varying the values of the two descriptors in an arbitrary range, the activity map as illustrated in FIG. 5 can be obtained.
3. New Catalyst Screening:
With respect to new catalysts, because the relationship between the energies of the two descriptors and the $NH_3$ synthesis rate is already clarified in the "2. Creating Activity Map:" described above, the synthesis rate of the catalyst can be acquired by calculating only the two descriptors (for example, the adsorption energy of N* and the dissociation activation energy of N-N*).

Because the energies of all of the intermediates and transition states included in the elementary reactions need to be calculated as described above in order to perform the general microkinetics, it is necessary to calculate an extremely large number of parameters. In contrast, when the microkinetics is performed using the descriptors, the energies of all of the intermediates and transition states in the elementary reactions for a standard catalyst are calculated in advance, and thus, only calculations corresponding to two descriptors are required even for an unknown catalyst. When the two descriptors are plotted on an X-axis and a Y-axis to create the activity map, the $NH_3$ synthesis catalyst belonging to a region where the reaction rates of the catalyst are high (a high activity region which will be described later) can be intuitively understood from the activity map.

The number of descriptors is not limited to two, and may be one or three or more, and descriptors which affect the reaction rate of the catalyst are preferably used. Further, for the calculation of the other parameters, not only the linear regression but also a non-linear regression method or the like may be used.

As illustrated in FIG. 4, the preparation unit 13 prepares a plurality of kinds of candidate substances for the catalyst.

The candidate substances for the catalyst may be a material used in the $NH_3$ synthesis, a material being considered for use in the $NH_3$ synthesis, a material never used in the $NH_3$ synthesis, or the like. The material may be an elemental metal, or an alloy including a plurality of metals, or a metal compound such as an oxide, a nitride, a carbide, or the like of a metal. The candidate substance may include a substance in which one kind of element on a surface of one candidate substance is substituted with another different element, as another candidate substance different from the one candidate substance.

The number of candidate substances for the catalyst is not particularly limited and can be selected, as appropriate, and may be several tens, several hundreds, several thousands, or the like, for example.

In a case where the candidate substance has a plurality of surfaces having different crystal planes, a plurality of candidate substances may be prepared for each of the surfaces having the different crystal planes. The reaction rate between the candidate substance and the element tends to differ depending on the crystal plane of the candidate substance appearing at the surface of the candidate substance. FIG. 6 illustrates an example of a relationship between the crystal plane of iron (Fe) and the $NH_3$ synthesis rate, for a case where the catalyst is iron, for example. As illustrated in FIG. 6, in the case where the catalyst is iron, the $NH_3$ synthesis rate differs depending on the crystal plane at the surface of the catalyst, and in a case where the crystal plane is the (111) plane or the (211) plane, the catalyst has a higher $NH_3$ synthesis rate compared to cases where other crystal planes are present at the surface of the catalyst. For this reason, it is preferable to prepare a plurality of surfaces of the candidate substance for each of the crystal planes.

As illustrated in FIG. 4, the first calculation unit 14 calculates the descriptors related to the catalytic reaction using the candidate substance, in a state where all of the candidate substances prepared by the preparation unit 13 are fixed.

The present embodiment calculates, as the descriptor, a first energy including a first intermediate energy of an intermediate of a reactant including a substance derived from raw materials ($N_2$, $H_2$) and adsorbed on a surface of a candidate substance, and a first transition state energy of a dissociation reaction in which the reactant is separated into two or more substances after a transition state of the intermediate of the reactant is adsorbed on the surface of the candidate substance.

The state where all of the candidate substances are fixed refers to a state in which positions and crystal structures of the candidate substances are fixed by assuming that that the positions and the crystal structures of the candidate substances do not move when the candidate substances react with the $N_2$ and the $H_2$.

Further, the first calculation unit 14 may calculate only the first intermediate energy or the first transition state energy as the first energy.

The first calculation unit 14 preferably calculates the descriptor using the machine learning potential 30. By using the machine learning potential 30, the first calculation unit 14 can reduce a calculation time of the descriptor compared to a case where first principles calculation (DFT calculation) or the like based on the density functional theory (DFT) is used.

The first calculation unit 14 may determine the descriptor by one calculation or may determine the descriptor by a plurality of calculations (for example, 10 calculations). In the case where the calculation is performed a plurality of times, an average value of a plurality of calculated values, or a maximum value or a minimum value of the plurality of calculated values may be used for the descriptor.

In the case where the descriptor is the first intermediate energy, the first calculation unit 14 preferably varies the adsorption position of the reactant including the substance derived from the raw materials on the surface of the candidate substance included in the elementary reaction, in the state where all of the candidate substances are fixed, and optimizes the structure of the intermediate structure including the candidate substance and the reactant. In this case, the first calculation unit 14 can select the intermediate structure having a stable structure.

Optimization of the structure refers to obtaining an optimum value that minimizes the energy of a predetermined structure. The same applies to the optimization of the structure in the following description.

The first calculation unit 14 preferably extracts a structure in which the adsorption position of the reactant with respect to the candidate substance is optimal and the first intermediate energy of the candidate substance and the intermediate of the reactant is most stable. In this case, the first calculation unit 14 can acquire the first intermediate energy of the intermediate of the reactant in a short time, although with a low accuracy.

In addition, as illustrated in FIG. 7, the first calculation unit 14 preferably includes a first structure optimization unit 141, a second structure optimization unit 142, and a first transition state energy acquisition unit 143. In the case where the descriptor is the transition state energy of the transition state of the intermediate, the first calculation unit 14 can acquire the first transition state energy in a short time, although with a low accuracy.

The first structure optimization unit 141 optimizes the structure of an intermediate structure including a candidate substance and a reactant of the reactant on a surface of the candidate substance included in a dissociation reaction from one molecule to two molecules, and calculates a first optimized structure. That is, the first structure optimization unit 141 calculates the first optimized structure by optimizing the structure of the intermediate structure including the candidate substance and the reactant, in a state where all of the structures of the candidate substance are fixed, in the dissociation reaction from one molecule to two molecules.

The second structure optimization unit 142 optimizes the structure when the reactant is separated into two or more substances including the candidate substance and the reactant, and calculates a second optimized structure.

The first transition state energy acquisition unit 143 calculates a first transition state energy, which is a transition state energy, from the first optimized structure obtained by the first structure optimization unit 141 and the second optimized structure obtained by the second structure optimization unit 142.

For example, assuming that AB* is a molecule in a state adsorbed on the candidate substance, A-B* is a molecule in a transition state of AB* in a process of separating AB* into A* and B*, A* is an intermediate of a molecule A, and B* is an intermediate of a molecule B, a reaction in which one molecule AB* separates into two molecules A* and B* progresses as indicated by the following reaction formula (1).

AB* -> A-B* -> A* + B* --- (1)

In a case where a dissociation reaction in which AB* separates from one molecule into two molecules occurs as indicated by the formula (1) described above, the first structure optimization unit 141 arranges AB* on the surface of the candidate substance in a state where all of the structures of the candidate substance are fixed, and optimizes the structure of the intermediate structure including the candidate substance and AB*.

The second structure optimization unit 142 optimizes the structure so that the structure separates into two molecules A* and B*.

The first transition state energy acquisition unit 143 calculates, as the first transition state energy, a transition state energy required for one molecule AB* to separate into two molecules A* and B*, using the nudged elastic band (NEB) method.

As illustrated in FIG. 4, the first plotting unit 15 plots the candidate substance based on the first energy (the energy including the first intermediate energy and the first transition state energy), which is the descriptor calculated by the first calculation unit 14, on the activity map (refer to FIG. 5) displayed by the map creation unit 12, and creates a first plot map.

The first screening unit 16 screens the candidate substances based on the first plot map created by the first plotting unit 15, and selects first screened candidate substances. That is, the first screening unit 16 employs a screening method which narrows down the candidate substances to candidate substances plotted in a high activity region including catalysts having a high activity (a high $NH_3$ synthesis rate), as the first screened candidate substances.

The high activity region may be a range smaller by a predetermined value or more with respect to the scaling line, by providing the scaling line on the activity map plotted with the candidate substances (refer to FIG. 5). In addition, the candidate substances may be narrowed down to a range less than a $NH_3$ producing energy of the catalyst by a predetermined value. The range may be a range in which the $NH_3$ synthesis rate is greater than or equal to a predetermined value. The predetermined value of the synthesis rate is preferably $10^{-4}$ [1/s] or greater.

The number of candidate substances to be further narrowed down can be appropriately selected according to the range of the high activity region to be set, and is preferably 5 to 30, more preferably 8 to 55, and still more preferably 10 to 20, for example.

The activity map can be created by the microkinetics using the descriptors, as described above. By using the energies of N* and N-N* in the formulas of the elementary reaction (refer to the formulas (I) to (VII) described above) of the reactant in the $NH_3$ synthesis as the descriptors, the activity map can be expressed as having a linear relationship for the descriptors of the standard catalyst, such as elemental metals such as Co, Rh, Ru, Cu, Fe, Re, or the like which will be described later. A straight line of this linear relationship can be used as the scaling line (refer to FIG. 5).

The producing energy can be calculated according to the following formula (i). In a case where the producing energy is less than 0 (the producing energy < 0), it indicates that the alloy is more stable than the element metal.

$$\text{Producing Energy} = E_{Alloy} - N_A \times E_{A(bulk)} - N_B \times E_{B(bulk)} \quad --- \quad (i)$$

(In the formula, $E_{Alloy}$ denotes a bulk energy of the alloy AB, $E_{A(bulk)}$ denotes a bulk energy of a metal A, $E_{B(bulk)}$ denotes a bulk energy of a metal B, $N_A$ denotes a number of atoms of the metal A in the alloy, and $N_B$ denotes a number of atoms of the metal B in the alloy.)

The range smaller by the predetermined value or more with respect to the scaling line can be appropriately selected according to the target product to be synthesized, a type of the material to be used, or the like, but in the case of the $NH_3$ synthesis catalyst, the range is preferably smaller by 0.25 eV or more with respect to the scaling line, for example.

The range less than the producing energy by the predetermined value can be appropriately selected according on the target product to be synthesized, the type of the material to be used, or the like, but in the case of the $NH_3$ synthesis catalyst, the range is preferably less than the producing energy by 0.05 eV/atom, for example.

A number of kinds of first screened candidate substances to be narrowed down to can be appropriately selected according to the number of candidate substances, a number of second screened candidate substances which will be described later, or the like, and may be several tens of kinds or several hundreds of kinds, for example.

In addition, when the first screening unit 16 narrows down the first screened candidate substances by plotting the candidate substances on the activity map, the first screening unit 16 may use a data table in which only information related to candidate substances 1, 2, 3, ..., N (N is an integer greater than or equal to 1) is listed, as illustrated in FIG. 8. The candidate substances in the data table listing only the candidate substances may be sorted in an order included in the high activity region, and the candidate substances included in the high activity region and greater than or equal to a threshold value may be narrowed down as the first screened candidate substances. The first screening unit 16 may narrow down the first screened candidate substances by plotting the candidate substances on the activity map by the first plotting unit 15, using the sorted data table.

As illustrated in FIG. 4, the second calculation unit 17 calculates, with respect to the first screened candidate substances, the descriptors related to catalytic reactions using the first screened candidate substances, in a state where the surface of the first screened candidate substances is relaxed.

The present embodiment calculates, as the descriptor, a second energy including a second intermediate energy of an intermediate of the reactant ($N_2$, $H_2$) used for the descriptor and adsorbed on the surface of the first screened candidate substances, and a second transition state energy of a dissociation reaction in which the reactant is separated into two or more substances after the reactant is adsorbed on the surface of the first screened candidate substances, similar to the first energy.

The state where the surface of the catalyst is relaxed refers to a state in which the catalyst is allowed to move, such that the structure can vary by moving several layers (for example, approximately two layers) from the surface of the catalyst, and is a state close to an actual movement of the catalyst.

In addition, the second calculation unit 17 may calculate only the second intermediate energy or the second transition state energy as the second energy.

The second calculation unit 17 preferably calculates the descriptor using the machine learning potential 30, similar to the first calculation unit 14. By using the machine learning potential 30, the second calculation unit 17 can reduce the calculation time of the descriptor compared to the case where the DFT calculation or the like is used.

In the case where the descriptor is the second intermediate energy, the second calculation unit 17 preferably varies the adsorption position of the reactant including the substance derived from the raw materials on the surface of the first screened candidate substances included in the elementary reaction, similar to the first calculation unit 14, in the state where the surface of the first screened candidate substances is relaxed, and optimizes the structure of the intermediate structure including the first screened candidate substance and the reactant. In this case, the second calculation unit 17 can select the intermediate structure having a stable structure.

Similar to the first calculation unit 14, the second calculation unit 17 preferably extracts a structure in which the adsorption structure of the reactant with respect to the first screened candidate substances is correct, and the second intermediate energy of the first screened candidate substances and the intermediate of the reactant is most stable. By optimizing the structure, the structure may vary from the structure of the molecule (for example, the structure of AB*) in the state adsorbed on the candidate substance, similar to the case where the structure is optimized in the first structure optimization unit 141. The second calculation unit 17 can exclude such a structure which varies, and can thus acquire the second intermediate energy of the reactant with a high accuracy.

Further, the second calculation unit 17 preferably includes a first structure optimization unit 171, a second structure optimization unit 172, and a second transition state energy acquisition unit 173, as illustrated in FIG. 9. In this case, the second calculation unit 17 can acquire the second transition state energy with a high accuracy in the case where the descriptor is the transition state energy of the transition state of the intermediate.

The first structure optimization unit 171 optimizes the structure of the intermediate structure including the first screened candidate substance and the reactant on the surface of the first screened candidate substances included in the dissociation reaction from one molecule to two molecules, and calculates the first optimized structure. That is, the first structure optimization unit 171 optimizes the structure of the intermediate structure including the first screened candidate substance and the reactant in the state where the surface of the first screened candidate substances is relaxed in the dissociation reaction from one molecule to two molecules, and calculates the first optimized structure.

The second structure optimization unit 172 optimizes a separation structure when the reactant is separated into two or more substances, and calculates the second optimized structure, similar to the second structure optimization unit 142.

The second transition state energy acquisition unit 173 calculates the second transition state energy, which is the transition state energy, from the first optimized structure obtained by the first structure optimization unit 171 and the second optimized structure obtained by the second structure optimization unit 172, similar to the first transition state energy acquisition unit 143.

For example, as described above, AB* is the molecule in the state adsorbed on the candidate substance, A-B* is the molecule in the transition state of AB* in the process of separating AB* into A* and B*, A* is the intermediate of the molecule A, B* is the intermediate of the molecule B, and the reaction in which one molecule AB* separates into two molecules A* and B* progresses as indicated by the reaction formula (1) described above.

In the dissociation reaction in which AB* separates from one molecule into two molecules as indicated by the formula (1) described above, the first structure optimization unit 171 arranges AB* on the surface of the first screened candidate substances in the state where the surface of the first screened candidate substances is relaxed, and optimizes the structure of the intermediate structure including the first screened candidate substance and AB*, similar to the first structure optimization unit 141.

The second structure optimization unit 172 optimizes the separation structure so that the separation structure separates into two molecules A* and B*.

The second transition state energy acquisition unit 173 calculates, as the second transition state energy, the transition state energy required for one molecule AB* to separate into two molecules A* and B*, similar to the first transition state energy acquisition unit 143.

As illustrated in FIG. 4, the second plotting unit 18 plots the first screened candidate substances on the activity map (refer to FIG. 5) based on the second energy which is the descriptor calculated by the second calculation unit 17, and creates a second plot map.

The second screening unit 19 screens the first screened candidate substances based on the second plot map created by the second plotting unit 18, and selects second screened candidate substances. That is, the second screening unit 19 can select the first screened candidate substances plotted in the high activity region of the second plot map as the second screened candidate substances, using the screening method.

The method of screening the first screened candidate substances is the same as the method of narrowing down the candidate substances to the first screened candidate substances by the first screening unit 16, and thus, details thereof will be omitted.

A number of kinds of second screened candidate substances to be selected can be appropriately selected according to the number of the first screened candidate substances or the like, and may be several tens of kinds or several hundreds of kinds, for example.

The filtering unit 21 narrows down the second screened candidate substances selected by the second screening unit 19, based on a catalyst stability, a catalyst cost, or the like.

The number of kinds of second screened candidate substances to be narrowed down to can be appropriately selected according to the number of second screened candidate substances to be selected or the like, and may be several kinds or several tens of kinds, for example.

The output unit 22 outputs the second screened candidate substance selected by the second screening unit 19 or the second screened candidate substances narrowed down by the filtering unit 21, to a display or the like.

In the present embodiment, the catalyst selection device 10 does not require the first calculation unit 14, the first plotting unit 15, and the first screening unit 16, or the second calculation unit 17, the second plotting unit 18, and the second screening unit 19, according to the number of candidate substances in the preparation unit 13. That is, the catalyst selection device 10 may narrow down the candidate substances by omitting the calculation in the state where all of the candidate substances are fixed or by omitting the calculation in the state where the surface of the candidate substances is relaxed.

(Hardware Configuration of Catalyst Selection Device 10)

Next, an example of a hardware configuration of the catalyst selection device 10 will be described. FIG. 10 is a block diagram illustrating the hardware configuration of the catalyst selection device 10. As illustrated in FIG. 10, the catalyst selection device 10 is configured by an information processing apparatus (computer), and can be physically configured as a computer system including a central processing unit (CPU: processor) 101 as an arithmetic processing unit, a random access memory (RAM) 102 and a read only memory (ROM) 103 as a main storage device, an input apparatus 104 as an input device, an output apparatus 105, a communication module 106, an auxiliary storage device 107 such as a hard disk or the like, or the like. These components are connected to each other via a bus 108. The output apparatus 105 and the auxiliary storage device 107 may be provided externally.

The CPU 101 controls an overall operation of the catalyst selection device 10, and performs various information processing. The CPU 101 can select a catalyst by executing a catalyst selection method or a catalyst selection program which will be described later and is stored in the ROM 103 or the auxiliary storage device 107.

The RAM 102 may include a non-volatile RAM which is used as a work area of the CPU 101 and stores main control parameters and information.

The ROM 103 stores a basic input/output system or the like. The catalyst selection program may be stored in the ROM 103.

The input apparatus 104 is an input device, such as a keyboard, a mouse, an operation button, a touchscreen panel, a display screen, or the like, and receives information input by a user as an instruction signal and outputs the instruction signal to the CPU 101.

The output apparatus 105 is a display device such as a monitor display or the like, a speaker, a printing device such as a printer or the like, or the like. In the output apparatus 105, information on a catalyst selection result or the like is displayed on the display device such as the monitor display or the like, for example, and a display screen is updated in response to an input operation via the input apparatus 104 or the communication module 106.

The communication module 106 is a data transmission and reception device, such as a network card or the like, and functions as a communication interface which receives information from an external data recording server or the like, and outputs analysis information to another electronic device.

The auxiliary storage device 107 is a storage device, such as a solid state drive (SSD), a hard disk drive (HDD), or the like, and stores various data, files, or the like required for the operation of the catalyst selection device 10, for example.

The functions of the catalyst selection device 10 are implemented by reading predetermined computer software (including the catalyst selection program) from the main storage device such as the RAM 102 or the like, or from the auxiliary storage device 107, and executing the software by the CPU 101, thereby reading data from and writing data to the main storage device such as the RAM 102 or the like, or the auxiliary storage device 107, and operating the input apparatus 104, the output apparatus 105, and the communication module 106.

Accordingly, each component of the catalyst selection device 10 illustrated in FIG. 4 can be implemented by cooperation of software and hardware, by executing the prestored predetermined computer software (including the catalyst selection program) by the processor in the computer including the catalyst selection device 10.

The catalyst selection program may be stored in the main storage device or the auxiliary storage device 107 included in the computer, for example. The catalyst selection program may be stored in a computer connected to a communication line, such as the Internet or the like, and the catalyst selection program may be provided by downloading a part or all of the catalyst selection program via the communication line. Further, the catalyst selection program may be provided or distributed via the communication line.

The catalyst selection program may be recorded (including being installed) in the computer from a state where a part or all of the catalyst selection program is stored in a portable storage medium, such as an optical disk such as a CD-ROM, a DVD-ROM, or the like, a semiconductor memory such as a flash memory or the like, or the like.

<Method for Selecting Catalyst>

A method for selecting a catalyst will be described. The method for selecting the catalyst can be performed using the catalyst selection system 1 described above. For this reason, a description of the items already described above will be omitted in part.

FIG. 11 is a flow chart illustrating the method for selecting the catalyst. As illustrated in FIG. 11, the method for selecting the catalyst is a method for selecting the $NH_3$ synthesis catalyst to be used for the catalytic reaction for producing $NH_3$, which is the target product, from $H_2$ and $N_2$ which are the raw materials.

In the method for selecting the catalyst, the descriptor selection unit 11 selects, as the descriptor, the energy of the intermediate structure or the transition state structure included in the elementary reactions of the catalytic reaction expressed by the formulas (I) to (VII) described above (descriptor selection process: step S11).

As the descriptor of the catalytic reaction, it is preferable to use adsorption energy when the reactant is adsorbed on the surface of the candidate substance, and transition state energy of the dissociation reaction in which the reactant is separated into two or more substances after the reactant is adsorbed on the surface of the candidate substance. For example, the adsorption energy ($E_N$) of the intermediate of nitrogen (N*) on the catalyst is used as the adsorption energy when the reactant is adsorbed on the surface of the candidate substance. The dissociation activation energy ($E_{N-N}$) of the transition state (N-N*) of nitrogen on the catalyst is used as the transition state energy of the dissociation reaction in which the reactant is separated into two or more substances after the reactant is adsorbed on the surface of the candidate substance.

In the present embodiment, the method for selecting the catalyst analyzes the elementary reactions included in the $NH_3$ synthesis reaction, and selects and uses as the descriptor, the energy related to the elementary reaction affecting the $NH_3$ synthesis the most, and thus, it is possible to accurately select the catalyst which can efficiently synthesize the $NH_3$.

Next, the map creation unit 12 creates the activity map representing the descriptors and the reactivity of the catalytic reaction (activity map creation process: step S12).

FIG. 12 illustrates an example of the activity map for a case where the descriptors of the catalytic reaction are the adsorption energy ($E_N$) of the intermediate (N*) of nitrogen, and the dissociation activation energy ($E_{N-N}$) of the transition state (N-N*) of nitrogen on the catalyst.

Next, the preparation unit 13 prepares several thousand kinds (for example, 2000 kinds) of candidate substances for the catalyst (preparation process: step S13).

Although the number of kinds of candidate substances to be prepared is several thousand in this example, the number of kinds of candidate substances is not limited to such, and may be an arbitrary number, as appropriate.

Next, the first calculation unit 14 calculates the descriptors related to the catalytic reactions using the candidate substances in a state where all of the candidate substances prepared by the preparation unit 13 are fixed (first calculation process: step S14).

As described above, the present embodiment calculates, as the descriptor, the first energy including the first intermediate energy of the intermediate of the reactant including the substance derived from the raw materials ($N_2$, $H_2$) and adsorbed on the surface of the candidate substance, and the first transition state energy of the dissociation reaction in which the reactant is separated into two or more substances after the transition state of the intermediate of the reactant is adsorbed on the surface of the candidate substance.

In the first calculation process (step S14), the first calculation unit 14 preferably calculates the descriptor of the candidate substance, using the machine learning potential 30.

The first energy may be determined by one calculation or may be determined by a plurality of calculations (for example, 10 calculations). In the case where the calculation is performed a plurality of times, an average value of a plurality of calculated values, or a maximum value or a minimum value of the plurality of calculated values may be used for the first energy.

In the first calculation process (step S14), in the case where the descriptor is the first intermediate energy, the first calculation unit 14 preferably varies the adsorption position of the reactant including the substance derived from the raw materials on the surface of the candidate substance included in the elementary reaction, in the state where all of the candidate substances are fixed, and optimizes the structure of the intermediate structure including the candidate substance and the reactant. In this case, the intermediate structure having a stable structure can be selected.

In the first calculation process (step S14), the first calculation unit 14 preferably extracts the structure in which the adsorption structure of the reactant with respect to the candidate substance is correct, and the first intermediate energy of the candidate substance and the intermediate of the reactant is most stable. In this case, the first intermediate energy of the candidate substance and the intermediate of the reactant can be calculated in a short time, although with a low accuracy.

In addition, the first calculation process (step S14) preferably includes a first structure optimization process (step S141), a second structure optimization process (step S142), and a first transition state energy acquisition process (step S143), as illustrated in FIG. 13. In this case, the first transition state energy of the transition state of the intermediate can be calculated as the descriptor in a short time, although with a low accuracy.

In the first structure optimization process (step S141), the first structure optimization unit 141 optimizes the structure of the intermediate structure including the candidate substance of the reactant and the reactant on the surface of the candidate substance included in the dissociation reaction from one molecule to two molecules, and calculates the first optimized structure. That is, in the first structure optimization process (step S141), the first structure optimization unit 141 optimizes the structure of the intermediate structure including the candidate substance and the reactant, in the state where all of the structures of the candidate substance are fixed, in the dissociation reaction from one molecule to two molecules, and calculates the first optimized structure.

The second structure optimization process (step S142) optimizes the structure when the reactant is separated into two or more substances including the candidate substance of the reactant and the reactant, and calculates the second optimized structure.

The first transition state energy acquisition process (step S143) calculates the first transition state energy, which is the transition state energy, from the first optimized structure obtained in the first structure optimization process (step S141) and the second optimized structure obtained in the second structure optimization process (step S142).

For example, AB* is the molecule adsorbed on the candidate substance, A-B* is the molecule in the transition state of AB* in the process of separating AB* into A* and B*, A* is the intermediate of the molecule A, B* is the intermediate of the molecule B, as described above, and the reaction in which one molecule AB* separates into two molecules A* and B* is assumed to progress as in the reaction formula (1) described above.

As indicated by the formula (1) described above, in the case where the dissociation reaction in which AB* changes from one molecule to two molecules occurs, the first structure optimization process (step S141), arranges by the first structure optimization unit 141, AB* on the surface of the candidate substance in the state where all of the structures of the candidate substances are fixed, and optimizes the structure of the intermediate structure including the candidate substance and AB*.

The second structure optimization process (step S142) optimizes the structure so that AB* separates into two molecules A* and B*.

In the first transition state energy acquisition process (step S143), the first transition state energy acquisition unit 143 calculates, as the first transition state energy, the transition state energy required for one molecule AB* to separate into two molecules A* and B*, using the nudged elastic band (NEB) method.

Next, as illustrated in FIG. 11, the first plotting unit 15 plots the candidate substances on the activity map (refer to FIG. 12) created in the map creation process (step S12) based on the first energy (the energy including the first intermediate energy and the first transition state energy) which is the descriptor calculated in the first calculation process (step S14), and creates a first plot map (first plotting process: step S15).

Next, the first screening unit 16 screens the candidate substances based on the first plot map created in the first plotting process (step S15), and selects the first screened candidate substances (first screening process: step S16).

That is, the first screening unit 16 narrows down the candidate substances plotted in the high activity region including the catalyst having a high activity (high $NH_3$ synthesis rate) as the first screened candidate substances.

The method and meaning of the setting the high activity region are as described above, and thus, a description of the details thereof will be omitted.

The first screened candidate substances are narrowed down to 100 kinds to 500 kinds, for example. The number of first screened candidate substances to be narrowed down to can be appropriately selected as described above according to the number of candidate substances, the number of second screened candidate substances, or the like, and may be several tens of kinds or several hundreds of kinds, for example.

FIG. 14 illustrates an example of a result of plotting the descriptors of the candidate substances. Similar to FIG. 12, FIG. 14 illustrates an activity map illustrating the relationship between the adsorption energy ($E_N$) of the intermediate (N*) of nitrogen, and the dissociation activation energy ($E_{N-N}$) of the transition state (N-N*) of nitrogen on the catalyst, as the descriptors. In addition, the illustration of a value of the $NH_3$ synthesis rate (the yield of the $NH_3$) converted into common logarithm ($log_{10}$) is omitted in order to clearly illustrate the plotted points.

Moreover, the first screening process (step S16), when narrowing down the first screened candidate substances by plotting the candidate substances on the activity map by the first screening unit 16, the data table listing only the information related to the candidate substances 1, 2, 3, ..., N (N is an integer greater than or equal to 1) may be used as described above (refer to FIG. 8). Further, the candidate substances in the data table listing only the candidate substances may be sorted in an order included in the high activity region, and the candidate substances included in the high activity region and greater than or equal to a threshold value may be narrowed down as the first screened candidate substances. The first screening unit 16 may narrow down the first screened candidate substances by plotting the candidate substances on the activity map by the first plotting unit 15, using the sorted data table.

Next, as illustrated in FIG. 11, the second calculation unit 17 calculates the descriptor related to the catalytic reaction with respect to the first screened candidate substances using the first screened candidate substances, in a state where the surface of the first screened candidate substances is relaxed (second calculation process: step S17).

The present embodiment calculates, as the descriptor, similar to the first energy, the second energy including the second intermediate energy of the intermediate of the reactant ($N_2$, $H_2$) used for the descriptor and adsorbed on the surface of the first screened candidate substance, and the second transition state energy of the dissociation reaction in which the reactant is separated into two or more substances after the reactant is adsorbed on the surface of the first screened candidate substance.

In the second calculation process (step S17), as in the first calculation process (step S14), the second calculation unit 17 preferable calculates the second energy of the first screened candidate substance, using the machine learning potential 30.

In the second calculation process (step S17), in the case where the descriptor is the second intermediate energy, the second calculation unit 17 preferably optimizes the structure of the intermediate structure including the first screened candidate substance and the reactant in the state where the surface of the first screened candidate substance is relaxed, similar to in the first calculation process (step S14). In this case, it possible to select the intermediate structure having a stable structure.

In the second calculation process (step S17), the second calculation unit 17 preferably extracts a structure in which the adsorption position of the reactant with respect to the first screened candidate substance is correct and the second intermediate energy of the first screened candidate substance and the intermediate of the reactant is most stable, similar to the first calculation process (step S14). In this case, it is possible to calculate the second intermediate energy of the reactant with a high accuracy.

In addition, as illustrated in FIG. 15, the second calculation unit 17 preferably performs the first structure optimizing process (step S171), the second structure optimization process (step S172), and the second transition state energy acquisition process (step S173), similar to the first calculation process (step S14). In this case, it is possible to calculate the transition state energy of the transition state of the intermediate with a high accuracy.

In the first structure optimization process (step S171), the first structure optimization unit 171 optimizes the structure of the intermediate structure including the first screened candidate substance and the reactant on the surface of the first screened candidate substance included in the dissociation reaction from one molecule to two molecules, and calculates the first optimized structure. That is, in the first structure optimization process (step S171), the first structure optimization unit 171 optimizes the structure of the intermediate structure including the first screened candidate substance and the reactant in the state where the surface of the first screened candidate substance is relaxed in the dissociation reaction from one molecule to two molecules, and calculates the first optimized structure.

In the second structure optimization process (step S172), the second structure optimization unit 172 optimizes the separation structure of the reactant when the reactant is separated into two or more substances, and calculates the second optimized structure, similar to the second structure optimization unit 142.

In the second transition state energy acquisition process (step S173), the second transition state energy acquisition unit 173 calculates the second transition state energy, which is the transition state energy, from the first optimized structure obtained in the first structure optimization process (step S171) and the second optimized structure obtained in the second structure optimization process (step S172), similar to the first transition state energy acquisition unit 143.

For example, AB* is the molecule adsorbed on the candidate substance, A-B* is the molecule in the transition state of AB* in the process of separating AB* into A* and B*, A* is the intermediate of the molecule A, B* is the intermediate of the molecule B, as described above, and the reaction in which one molecule AB* separates into two molecules A* and B* is assumed to progress as in the reaction formula (1) described above.

As indicated by the formula (1) described above, in the case where the dissociation reaction in which AB* changes from one molecule to two molecules occurs, the first structure optimization process (step S171), arranges by the first structure optimization unit 171, AB* on the surface of the first screened candidate substance in the state where the surface of the first screened candidate substance is relaxed, and optimizes the structure of the intermediate structure including the first screened candidate substance and AB*, similar to the first structure optimization process (step S141).

The second structure optimization process (step S172) optimizes the separation structure so that AB* separates into two molecules A* and B*.

In the transition state energy acquisition process (step S173), the second transition state energy acquisition unit 173 calculates, as the second transition state energy, the transition state energy required for one molecule AB* to separate into two molecules A* and B*, similar to the transition state energy acquisition process (step S143).

Next, as illustrated in FIG. 11, the second plotting unit 18 plots the first screened candidate substances on the activity map (refer to FIG. 12) created by the map creation process (step S12) based on the second energy (the energy including the second intermediate energy and the second transition state energy) which is the descriptor calculated by the second calculation unit 17, and creates the second plot map (second plotting process: step S18).

Next, the second screening unit 19 screens the first screened candidate substances based on the second plot map created by the second plotting process (step S18), and selects the second screened candidate substances (second screening process: step S19).

That is, the second screening unit 19 can select, as the second screened candidate substances, the first screened candidate substances plotted in the high activity region including the catalyst having the high activity by the second plotting process (step S18).

For example, 30 kinds to 100 kinds of second screened candidate substances are selected.

Examples of the second screened candidate substances include alloys, such as IrSc, $FePd_3$, $MnTc_3$, IrY, $CrPd_3$, $MnPd_3$, RhY, $Co_3Pt$, $CrPt_3$, $FeRh_3$, $CrRh_3$, $Ni_3Ti$, $Ir_3V$, $Pt_3Ti$, $Co_3Rh$, $Pd_3Ti$, $Ni_3Zr$, $Co_3W$, $NiPd_3$, $FeNi_3$, $Ir_3Mn$, IrMn, MnPt, $MnNi_3$, $Ir_3Re$, MnRh, $Pd_3V$, $MnPt_3$, $Rh_3V$, $Rh_3Ti$, or the like, for example.

In a case where 30 kinds of second screened candidate substances are selected, examples of the 30 kinds of second screened candidate substances that are selected include alloys, such as IrSc, $FePd_3$, $MnTc_3$, IrY, $CrPd_3$, $MnPd_3$, RhY, $Co_3Pt$, $CrPt_3$, $FeRh_3$, $CrRh_3$, $Ni_3Ti$, $Ir_3V$, $Pt_3Ti$, $Co_3Rh$, $Pd_3Ti$, $Ni_3Zr$, $Co_3W$, $NiPd_3$, $FeNi_3$, $Ir_3Mn$, IrMn, MnPt, $MnNi_3$, $Ir_3Re$, MnRh, $Pd_3V$, $MnPt_3$, $Rh_3V$, $Rh_3Ti$, or the like.

An example of a table illustrating the catalysts selected as the 30 kinds of second screened candidate substances is shown in Table 1.

[Table 1]

| No. | Composition | Adsorption energy ($E_N$) [eV] of catalyst and intermediate (N*) of nitrogen | Dissociation activation energy ($E_{N-N}$) [eV] of transition state (N-N*) of nitrogen in catalyst | $NH_3$ synthesis rate [1/s] |
|---|---|---|---|---|
| 1 | IrSc | -0.461 | 0.716 | 0.373 |
| 2 | RhY | -0.669 | 0.560 | 0.119 |
| 3 | IrY | -0.492 | 0.851 | $9.91 \times 10^{-3}$ |
| 4 | $MnTc_3$ | -0.953 | -0.002 | $5.67 \times 10^{-4}$ |
| 5 | IrMn | -0.521 | 1.055 | $4.31 \times 10^{-4}$ |
| 6 | $Ni_3Ti$ | -0.492 | 0.968 | $4.31 \times 10^{-4}$ |
| 7 | $Co_3Rh$ | -0.325 | 1.265 | $4.88 \times 10^{-5}$ |
| 8 | $Co_3W$ | -0.990 | 0.202 | $4.44 \times 10^{-5}$ |
| 9 | $Ni_3Zr$ | -0.417 | 1.165 | $3.09 \times 10^{-5}$ |
| 10 | $CrRh_3$ | -0.399 | 1.117 | $3.09 \times 10^{-5}$ |
| 11 | $Pd_3V$ | -0.443 | 1.209 | $3.09 \times 10^{-5}$ |
| 12 | $Ir_3V$ | -0.372 | 1.182 | $3.09 \times 10^{-5}$ |

(continued)

| No. | Composition | Adsorption energy ($E_N$) [eV] of catalyst and intermediate (N*) of nitrogen | Dissociation activation energy ($E_{N-N}$) [eV] of transition state (N-N*) of nitrogen in catalyst | $NH_3$ synthesis rate [1/s] |
|---|---|---|---|---|
| 13 | $Rh_3V$ | -0.534 | 1.108 | $1.88 \times 10^{-5}$ |
| 14 | $Ir_3Re$ | -0.336 | 1.384 | $2.12 \times 10^{-6}$ |
| 15 | MnRh | -0.298 | 1.451 | $2.12 \times 10^{-6}$ |
| 16 | $Rh_3Ti$ | -0.382 | 1.366 | $1.34 \times 10^{-6}$ |
| 17 | $MnNi_3$ | -0.398 | 1.274 | $1.34 \times 10^{-6}$ |
| 18 | $CrPd_3$ | -0.024 | 1.604 | $2.08 \times 10^{-7}$ |
| 19 | $FeNi_3$ | -0.234 | 1.526 | $1.41 \times 10^{-7}$ |
| 20 | $FeRh_3$ | -0.137 | 1.525 | $1.41 \times 10^{-7}$ |
| 21 | $Co_3Pt$ | 0.046 | 1.775 | $1.29 \times 10^{-8}$ |
| 22 | $Ir_3Mn$ | -0.111 | 1.746 | $9.05 \times 10^{-9}$ |
| 23 | $MnPd_3$ | 0.171 | 1.968 | $7.65 \times 10^{-10}$ |
| 24 | $CrPt_3$ | 0.128 | 1.948 | $7.65 \times 10^{-10}$ |
| 25 | $Pd_3Ti$ | 0.037 | 1.913 | $5.60 \times 10^{-10}$ |
| 26 | $NiPd_3$ | 0.070 | 1.999 | $5.60 \times 10^{-10}$ |
| 27 | $FePd_3$ | 0.335 | 2.143 | $4.37 \times 10^{-11}$ |
| 28 | $Pt_3Ti$ | 0.129 | 2.028 | $3.33 \times 10^{-11}$ |
| 29 | MnPt | 0.136 | 2.172 | $3.33 \times 10^{-11}$ |
| 30 | $MnPt_3$ | 0.101 | 2.162 | $2.44 \times 10^{-11}$ |

FIG. 16 illustrates an example of the activity map in which 30 kinds of second screened candidate substances illustrated in Table 1 are plotted. As illustrated in FIG. 16, the alloys of IrSc, $FePd_3$, $MnTc_3$, IrY, $CrPd_3$, $MnPd_3$, RhY, $Co_3Pt$, $CrPt_3$, $FeRh_3$, $CrRh_3$, $Ni_3Ti$, $Ir_3V$, $Pt_3Ti$, $Co_3Rh$, $Pd_3Ti$, $Ni_3Zr$, $Co_3W$, $NiPd_3$, $FeNi_3$, $Ir_3Mn$, IrMn, MnPt, $MnNi_3$, $Ir_3Re$, MnRh, $Pd_3V$, $MnPt_3$, $Rh_3V$, and $Rh_3Ti$ are plotted as the 30 kinds of second screened candidate substances.

The number of the second screened candidate substances to be selected can be appropriately selected according to the number of the first screened candidate substances or the like as described above, and may be several kinds or several tens of kinds, for example.

Next, the filtering unit 21 may narrow down the second screened candidate substances obtained in the second screening process (step S19), based on the catalyst stability or the catalyst cost (filtering process: step S20).

The second screened candidate substances are narrowed down to 30 kinds to 50 kinds, for example. The number of second screened candidate substances to be narrowed down to can be appropriately selected according to the number of second screened candidate substances to be selected or the like, and may be several kinds to several tens of kinds, for example.

Next, the second screened candidate substances selected by the second screening unit 19 or the second screened candidate substances narrowed down to by the filtering unit 21 are displayed or the like and output by the output unit 22 (output process: step S21).

The method for selecting the catalyst enables the selection of the $NH_3$ synthesis catalyst having a good $NH_3$ production efficiency.

Examples of the $NH_3$ synthesis catalyst having the good $NH_3$ production efficiency selected by the method for selecting the catalyst include alloys, such as IrSc, $FePd_3$, $MnTc_3$, IrY, $CrPd_3$, $MnPd_3$, RhY, $Co_3Pt$, $CrPt_3$, $FeRh_3$, $CrRh_3$, $Ni_3Ti$, $Ir_3V$, $Pt_3Ti$, $Co_3Rh$, $Pd_3Ti$, $Ni_3Zr$, $Co_3W$, $NiPd_3$, $FeNi_3$, $Ir_3Mn$, IrMn, MnPt, $MnNi_3$, $Ir_3Re$, MnRh, $Pd_3V$, $MnPt_3$, $Rh_3V$, $Rh_3Ti$, or the like.

In a case where 30 kinds of $NH_3$ synthesis catalysts are selected by the method for selecting the catalyst as the $NH_3$ synthesis catalysts having the good $NH_3$ production efficiency, the alloys of IrSc, $FePd_3$, $MnTc_3$, IrY, $CrPd_3$, $MnPd_3$, RhY, $Co_3Pt$, $CrPt_3$, $FeRh_3$, $CrRh_3$, $Ni_3Ti$, $Ir_3V$, $Pt_3Ti$, $Co_3Rh$, $Pd_3Ti$, $Ni_3Zr$, $Co_3W$, $NiPd_3$, $FeNi_3$, $Ir_3Mn$, IrMn, MnPt, $MnNi_3$, $Ir_3Re$, MnRh, $Pd_3V$, $MnPt_3$, $Rh_3V$, and $Rh_3Ti$ are selected as the 30 kinds of $NH_3$ synthesis catalysts.

Whether or not the catalyst selected by the method for selecting the catalyst is a $NH_3$ synthesis catalyst having a

high $NH_3$ synthesis rate and a good $NH_3$ production efficiency can be determined, for example, by comparing the energy of the catalyst selected by the method for selecting the catalyst with the energy of the catalyst selected by the conventional quantum chemistry calculation that is generally used, and verifying the deviation therefrom.

FIG. 17 is a diagram illustrating a correlation between the energy of the intermediate or the transition state of the standard catalyst calculated by the DFT calculation and the energy of the intermediate or the transition state of the standard catalyst, which is the same as the standard catalyst on the abscissa, calculated by the method for selecting the catalyst, which appear in the elementary reactions related to the $NH_3$ synthesis in the standard catalysts required when creating the activity map. The DFT calculation is a technique of the conventional quantum chemistry calculation that is generally used. The standard catalyst required when creating the activity map is an elemental metal, such as Co, Rh, Ru, Cu, Fe, Re, Pt, or the like, or the like. As illustrated in FIG. 17, because a linear relationship stands between the plotted catalysts, the machine learning potential 30 can reproduce substantially the same result as the calculation result obtained by the DFT calculation. Hence, it may be regarded that the energies of the intermediate and the transition state of various catalysts can be predicted with high accuracy, by using the method for selecting the catalyst.

An example of the activity map of the catalyst created using the DFT calculation is illustrated in FIG. 18. FIG. 18 also illustrates the activity map of the catalyst created using the method for selecting the catalyst. The activity maps of the catalyst illustrated in (a) and (b) of FIG. 18 were created at a temperature of 400°C and a pressure of 100 bar during the calculation. As illustrated in FIG. 18, the activity map of the catalyst selected using the method for selecting the catalyst (refer to (b) of FIG 18) shows substantially the same tendency as the activity map of the catalyst created using the DFT calculation (refer to (a) of FIG. 18). Hence, the energy calculated by the machine learning potential 30 can be used to create and reproduce an activity map that is substantially similar to the activity map created using the energy calculated by the DFT calculation.

The 30 kinds of alloys described above, which are selected by the method for selecting the catalyst as the $NH_3$ synthesis catalysts having the good $NH_3$ production efficiency, may be plotted on the activity map of the catalyst created using the method for selecting the catalyst, as illustrated in FIG. 19, and thus, it may be determined that the $NH_3$ synthesis catalysts have a high $NH_3$ synthesis rate and a good $NH_3$ production efficiency. In addition, pure metals plotted on the activity map illustrated in FIG. 19 are generally used catalysts, and it may be determined that the 30 kinds of alloys described above can exhibit a high $NH_3$ synthesis rate and a high $NH_3$ production efficiency compared to the pure metals generally used as catalysts. The activity map illustrated in FIG. 19 was created at the temperature of 400°C and the pressure of 100 bar during the calculation, similar to FIG. 18.

For this reason, it may be regarded that the catalyst selected by the method for selecting catalyst is a $NH_3$ synthesis catalyst having a good $NH_3$ production efficiency.

In the present embodiment, the method for selecting the catalyst may not include or omit the first calculation process (step S14), the first plotting process (step S15), and the first screening process (step S16), or the second calculation process (step S17), the second plotting process (step S18), and the second screening process (step S19), according to the number of candidate substances prepared in the preparation process (step S13). That is, in the method for selecting the catalyst, the candidate substances may be narrowed down by omitting the calculation in the state where all of the candidate substances are fixed, or omitting the calculation in the state where the surface of the candidate substance is relaxed.

As described above, in the method for selecting the catalyst, the first calculation process (step S14) calculates the first energy of the plurality of candidate substances prepared by the preparation process (step S13), and the first screening process (step S16) narrows down the first screened candidate substances from the candidate substances plotted on the first plot map created by the first plotting process (step S15). Further, in the method for selecting the catalyst, the second calculation process (step S17) calculates the second energy of the selected first screened candidate substances, and the second screening process (step S16) selects the second screened candidate substances from the first screened candidate substances plotted on the second plot map created by the second plotting process (step S18).

That is, first, in a first stage of the method for selecting the catalyst, the descriptors related to the catalytic reactions using the candidate substances are calculated in a short time, although with a low accuracy, in the state where all of candidate substances are fixed, the calculated descriptors are plotted on the activity map, and the first screened candidate substances are narrowed down from the plotted candidate substances. Next, in a second stage of the method for selecting the catalyst, the descriptors related to the catalytic reactions using the narrowed down first screened candidate substances are recalculated with a high accuracy in the state where the surface of the first screened candidate substances is relaxed. Then, the method for selecting the catalyst narrows down the first screened candidate substances further based on the calculated more accurate descriptors of the first screened candidate substances, and selects the second screened candidate substances. Hence, the method for selecting the catalyst can select an effective catalyst from candidate substances quickly and with a high accuracy, and can thus efficiently select the $NH_3$ synthesis catalyst to be used for the catalytic reaction for synthesizing the target product ($NH_3$) from the raw materials ($H_2$, $N_2$).

<Method for Producing $NH_3$ Synthesis Catalyst>

A method for producing the $NH_3$ synthesis catalyst according to the present embodiment is not particularly limited, and can be appropriately selected according to the types of components included in the $NH_3$ synthesis catalyst. An example of the method for producing the $NH_3$ synthesis catalyst is illustrated in FIG. 20. As illustrated in FIG. 20, the method for producing the $NH_3$ synthesis catalyst may include a selection process (step S31) for selecting the catalyst, and a preparation process (step S32) for preparing the catalyst.

In the selection process (step S31), the catalyst is selected by the method for selecting the catalyst described above.

In the preparation process (step S32), the catalyst selected by the selection process (step S31) is prepared. The method for preparing the catalyst is not particularly limited, and a general preparation method may be used depending on the type of the selected catalyst. The selected catalysts can be prepared by searching and referring to documents disclosed in databases or the like which are open to the public, such as the inorganic materials database "AtomWork (atom work)", the substances and materials database "AtomWork Adv (atom work advanced)", or the like provided by the National Institute for Materials Science (NIMS), for example.

The method for producing the $NH_3$ synthesis catalyst can prepare the catalyst selected by the method for selecting catalyst described above, and can thus appropriately produce the $NH_3$ synthesis catalyst capable of efficiently synthesizing the $NH_3$.

<$NH_3$ Synthesis Method>

The $NH_3$ synthesis method according to the present embodiment synthesizes the $NH_3$ by causing a gas including hydrogen and nitrogen to come into contact with the $NH_3$ synthesis catalyst according to the present embodiment described above.

The $NH_3$ synthesis method according to the present embodiment is not particularly limited as long as the $NH_3$ synthesis catalyst according to the present embodiment is used as the catalyst, and may use a general method for synthesizing the $NH_3$ using a catalyst, for example.

In the reaction for synthesizing ammonia from hydrogen and nitrogen, theoretically, 2 mol of ammonia is obtained by reacting 1 mol of nitrogen with 3 mol of hydrogen ($N_2 + 3H_2 \rightarrow 2NH_3$). For this reason, a gas having a molar ratio of hydrogen and nitrogen ($H_2/N_2$) of 0.5/1 to 3/1 is preferably used as the gas including hydrogen and nitrogen. In addition, the gas including hydrogen and nitrogen may further include an inert gas, such as argon or the like, as a carrier gas other than hydrogen gas and nitrogen gas, but from a viewpoint of increasing the amount of $NH_3$ produced, the gas including hydrogen and nitrogen is preferably composed solely of the hydrogen gas and the nitrogen gas.

The method for causing the gas including hydrogen and nitrogen to come into contact with the $NH_3$ synthesis catalyst according to the present embodiment is not particularly limited, and a general method capable of causing a gas to come into contact with the catalyst can be appropriately employed. The method for causing the gas including hydrogen and nitrogen to come into contact with the $NH_3$ synthesis catalyst may be appropriately selected from a method which fills the $NH_3$ synthesis catalyst in a sealable reaction chamber and thereafter replaces an atmosphere gas inside the reaction chamber with the gas including hydrogen and nitrogen so as to cause the gas including hydrogen and nitrogen to come into contact with the $NH_3$ synthesis catalyst, a method which disposes the $NH_3$ synthesis catalyst inside a gas distribution pipe and flows the gas including hydrogen and nitrogen through the gas distribution pipe so as to cause the gas including hydrogen and nitrogen to come into contact with the $NH_3$ synthesis catalyst, or the like, for example.

In the case where the gas including hydrogen and nitrogen is caused to come into contact with the $NH_3$ synthesis catalysts according to the present embodiment to synthesize the $NH_3$ by the reaction thereof, the temperature may be set to 300°C to 500°C because the higher the reaction temperature, the lower the equilibrium concentration becomes. In addition, the pressure condition for the reaction is not particularly limited, and may be 0.1 MPa to 10 MPa from a viewpoint of further reducing the energy required to synthesize the $NH_3$.

According to the $NH_3$ synthesis method according to the present embodiment, the $NH_3$ synthesis catalyst according to the present embodiment provides an excellent $NH_3$ synthesis, and thus, it is possible to more efficiently synthesize the $NH_3$.

Although the embodiments are described above, the embodiments are presented as examples, and the present invention is not limited to these embodiments. The embodiments described above can be implemented in various other forms, and various combinations, omissions, substitutions, variations, or the like can be made without departing from the scope of the subject matte of the present invention. The embodiments and modifications thereof are included in the scope of the subject matter of the present invention, and are included in the present invention described in the claims and the scope of equivalents thereof.

[Exemplary Implementations]

Hereinafter, the embodiment will be described more specifically with reference to exemplary implementations, but the embodiment is not limited to these exemplary implementations.

<Exemplary Implementations>

In the present exemplary implementation, the $NH_3$ synthesis rate was determined by preparing the catalyst, and performing calculations corresponding to catalytic reactions when synthesizing the $NH_3$ from nitrogen gas and hydrogen gas by the catalytic reactions. When calculating the $NH_3$ synthesis rate of the catalyst, the catalyst is actually prepared, and a synthesis yield of the $NH_3$ produced from the nitrogen and hydrogen by the catalytic reaction of the prepared catalyst is measured, so as to calculate the $NH_3$ synthesis rate. By preparing the catalyst and performing the calculations corresponding to the catalytic reactions of the prepared catalyst, a $NH_3$ synthesis rate that is substantially the same as the $NH_3$ synthesis rate of the $NH_3$ actually synthesized using the prepared catalyst. MATLANTIS (registered trademark) was used as a neural network potential (NNP) for the calculation.

The candidate catalyst and the reference catalyst used as the catalysts, and the temperature and the pressure during the calculation are as follows.

Candidate catalysts: $Pd_3V$, $CrRh_3$, $Co_3Rh$, IrMn, IrSc
Reference catalyst: Ru, Re, Pt
Temperature: 523 K
Pressure: 0.8 bar

[Preparation of Catalyst]

When the catalyst is an alloy composed of a plurality of elements, the catalyst needs to be alloyed without aggregation or separation of respective metals in a desired composition. Whether or not alloying occurs when a plurality of elements are mixed can be evaluated by a stability of the catalyst structure. For this reason, the preparation of the catalyst in an experiment substantially corresponds to the stability of the structure of the catalyst (alloy). Accordingly, the stability of the structure of the catalyst, corresponding to the preparation of the catalyst, was calculated by a cluster model.

In order to calculate a structure that reproduces an actual experimental structure, the composition was varied on the cluster model, catalysts (alloys) having 2310 kinds of patterns of structures were created, and a stable structure of the catalyst was searched using a genetic algorithm. By calculating the stability of the catalyst having a candidate composition by the search, it was confirmed that the catalyst having the candidate composition is stabilized (alloyed) without aggregation or separation.

In this exemplary implementation, a cluster structure composed of two kinds of elements (elements 1 and 2) and 55 atoms was prepared, and the position of the element that is most stable in each alloy composition was searched using the genetic algorithm. Each cluster structure was optimized every time a new structure is generated. The stability of the cluster structure composed of the elements 1 and 2 was evaluated from an excess energy $E_{exc}$. The excess energy $E_{exc}$ was obtained from the following formula (11). The excess energy $E_{exc}$ indicates how stable the alloy cluster structure is compared to when the elements 1 and 2 are not mixed.

$$E_{exc} = (E_{cluster} - n_{Metal1} \times E_{Metal1} - n_{Metal2} \times E_{Metal2})/55 \quad ---(11)$$

(In the formula, $E_{cluster}$ denotes an energy of the alloyed cluster, $n_{Metal1}$ denotes an atomic number of the element 1 in the cluster, $E_{Metal1}$ denotes an energy of the cluster structure when the cluster is composed of a single atom 1, $n_{Metal2}$ denotes an atomic number of the element 2 in the cluster, and $E_{Metal2}$ denotes an energy of the cluster structure when the cluster is composed of a single atom 2.)

In a case where the catalyst is a CrRh alloy, when a composition ratio of Cr to Rh is 1:3, that is, a number of elements of Cr is 13 and a number of elements of Rh is 42, the excess energy $E_{exc}$ of the most stable structure becomes a negative value as illustrated in FIG. 21, and it was confirmed that the CrRh alloy becomes stabilized (alloyed). At this state, a diameter of the CrRh alloy was approximately 1.09 nm.

In a case where the catalyst is a IrMn alloy, when a composition ratio of Ir to Mn is 1:1, that is, a number of elements of Ir is 27 and a number of elements of Mn is 28, the excess energy $E_{exc}$ of the most stable structure assumes a negative value as illustrated in FIG. 22, and it was confirmed that the IrMn alloy becomes stabilized (alloyed). A diameters of the IrMn alloy was approximately 1.03 nm.

[Catalytic Reactions]

The catalytic reactions correspond approximately to the results of reaction rate simulations (microkinetics) obtained from all of the elementary reactions related to the $NH_3$ synthesis of the catalyst. Hence, in order to obtain results corresponding to the catalytic reactions, microkinetics was performed to calculate the $NH_3$ synthesis rate of the catalyst. The microkinetics includes enumeration of the elementary reactions, calculation of the energy of the elementary reactions, and calculation of the reaction rate.

(Enumeration of Elementary Reactions)

All of the elementary reactions related to the $NH_3$ synthesis of the catalyst are represented by the following seven formulas (I) to (VII). In the formulas, "*" denotes an empty adsorption site on a surface of the catalyst on which the reactant, such as an element, a molecule, or the like included in the raw materials, is adsorbed. In the formulas (I) to (VII), the raw materials are $N_2$ and $H_2$, the intermediates of the raw materials are $N_2$*, H*, H*, $NH_2$*, and $NH_3$*, and the transition states of the intermediates are N-N*, N-H*, NH-H*, and $NH_2$-H*.

$N_2(g)+* \rightarrow N_2*$ --- (I)

$H_2(g)+2* \rightarrow 2H*$ --- (II)

$N_2*+* \rightarrow N\text{-}N*+* \rightarrow 2N*$ --- (III)

$N*+H* \rightarrow N\text{-}H*+* \rightarrow NH*+*$ --- (IV)

$NH*+H* \rightarrow NH\text{-}H*+*_h \rightarrow NH_2*+*$ --- (V)

$NH_2*+H* \rightarrow NH_2\text{-}H*+* \rightarrow NH_3*+*$ - - - (VI)

$NH_3* <=> NH_3\ (g)\ *$ - - - (VII)

(Calculation of Energy of Elementary Reactions)

The calculation of the energy of all of the elementary reactions related to the $NH_3$ synthesis of the catalyst was performed in the following manner:

First, the structures of the molecules ($N_2$, $H_2$, $NH_3$) in the vapor phase were optimized in a vacuum. A bulk structure of the alloy was obtained from a known database (Mamun, O. et al., Sci Data 6, 76 (2019)), and the structure was optimized while maintaining the crystalline structure of the alloy. A specific surface ((0001) plane, (111) plane, or (101) plane) of the alloy was cut out from the obtained bulk structure, and a slab structure composed of five layers was obtained. Three lower layers among the five layers were fixed, and the two upper layers were relaxed to optimize the structure of the slab structure.

Next, the intermediate structure included in the elementary reactions disposed an adsorbed molecule on the slab structure, and a stable structure was searched by the minima hopping method. The transition state structure was searched by the NEB method after preparing initial and final state structures of the elementary reactions. Each structural optimization was performed so that fmax < 0.01 [eV/Å]. fmax is a convergence condition used for the structure optimization. When a force applied to each atom became fmax or less, it was regarded that a sufficiently stable structure is obtained, and the structure optimization was terminated.

The energy of the intermediate and the transition state structure after each structural optimization was calculated as a relative energy $E_{reference}$ from the following formula (12).

$$E_{reference} = E_{slab+ads} - E_{slab} - (xE_N + yE_H) \quad --- \quad (12)$$

(In the formula, $E_{slab+ads}$ denotes an energy of the structure in which the molecules are adsorbed on the surface, $E_{slab}$ denotes an energy of the slab structure, $E_N$ denotes an energy of the element with reference to $N_2$ gas, $E_H$ denotes an energy of the element with reference to $H_2$ gas, x denotes a number of N of the adsorbed molecules, and y denotes a number of H of the adsorbed molecules.)

(Calculation of Reaction Rate)

Enthalpies and entropies of gas-phase molecules ($N_2$, $H_2$, $NH_3$) were calculated by ideal gas approximation, and enthalpies and entropies of the intermediate and transition state structures were calculated by harmonic approximation. Reaction rate constants of the elementary reactions were calculated by the transition state theory based on vibration calculation results, and the $NH_3$ synthesis rate was obtained by solving simultaneous ordinary differential equations.

Calculated results of the $NH_3$ synthesis rate of the $NH_3$ synthesized by the candidate catalysts and the reference catalysts are shown in Table 2. In addition, FIG. 23 illustrates a relationship between an adsorption energy ($E_N$) of an intermediate (N*) of nitrogen on the catalyst in a candidate catalyst and a reference catalyst, and a calculation result of a synthesis rate of $NH_3$ using the candidate catalyst and the reference catalyst. Further, FIG. 24 illustrates an experimental result of the adsorption energy ($E_N$) of the intermediate (N*) of nitrogen on the catalyst, and the synthesis rate of $NH_3$, for the reference catalyst. FIG. 24 is based on Andrew J. Medford et al., "From the Sabatier principle to a predictive theory of transition-metal heterogeneous catalysis", Journal of Catalysis, August 2015, Vol. 328, pp. 36-42. In FIG. 23 and FIG. 24, the $NH_3$ synthesis rate (the yield of $NH_3$) is indicated by a value converted into common logarithm ($\log_{10}$).

[Table 2]

| Catalyst | | Elemental reaction used for calculation | Temperature [K] | Pressure [bar] | $NH_3$ synthesis rate [1/s] |
|---|---|---|---|---|---|
| Reference catalyst | Ru | All elemental reactions | 523 | 0.8 | $1.05 \times 10^{-13}$ |
| | Pt | All elemental reactions | 523 | 0.8 | $1.80 \times 10^{-29}$ |
| | Re | All elemental reactions | 523 | 0.8 | $4.51 \times 10^{-22}$ |
| Candidate catalyst | IrMn | All elemental reactions | 523 | 0.8 | $1.08 \times 10^{-14}$ |
| | $CrRh_3$ | All elemental reactions | 523 | 0.8 | $1.33 \times 10^{-12}$ |
| | $Pd_3V$ | All elemental reactions | 523 | 0.8 | $2.66 \times 10^{-12}$ |
| | IrSc | All elemental reactions | 523 | 0.8 | $3.35 \times 10^{-16}$ |
| | $Co_3Rh$ | All elemental reactions | 523 | 0.8 | $2.08 \times 10^{-13}$ |

As illustrated in Table 2, FIG. 23, and FIG. 24, the $NH_3$ synthesis rates of the reference catalysts were high in the order of Ru, Re, and Pt, and the $NH_3$ synthesis rates when using the reference catalysts demonstrated an equivalent relationship between the experimental results and the calculation results. As illustrated in Table 2 and FIG. 23, among the candidate catalysts, the $NH_3$ synthesis rate was highest for $Pd_3V$ among $Pd_3V$, $CrRh_3$, $Co_3Rh$, IrMn, and IrSc, and the synthesis rate was high in the order of $Pd_3V$, $CrRh_3$, $Co_3Rh$, IrMn, and IrSc. Accordingly, it may be regarded that the $NH_3$ synthesis rate when actually using the candidate catalysts is also the highest for $Pd_3V$ among $Pd_3V$, $CrRh_3$, $Co_3Rh$, IrMn, and IrSc, and the synthesis rate is high in the order of $Pd_3V$, $CrRh_3$, $Co_3Rh$, IrMn, and IrSc.

In addition to the 5 kinds of catalysts $Pd_3V$, $CrRh_3$, $Co_3Rh$, IrMn, and IrSc, the catalysts selected by the method for selecting the catalyst described above include other 25 kinds of catalysts ($FePd_3$, $MnTc_3$, IrY, $CrPd_3$, $MnPd_3$, RhY, $Co_3Pt$, $CrPt_3$, $FeRh_3$, $Ni_3Ti$, $Ir_3V$, $Pt_3Ti$, $Pd_3Ti$, $Ni_3Zr$, $Co_3W$, $NiPd_3$, $FeNi_3$, $Ir_3Mn$, MnPt, $MnNi_3$, $Ir_3Re$, MnRh, $MnPt_3$, $Rh_3V$, and $Rh_3Ti$. Although the $NH_3$ synthesis rates when using these 25 kinds of catalysts were not calculated, the 25 kinds of catalysts were selected by the method for selecting the catalyst described above, similar to the 5 kinds of catalysts ($Pd_3V$, $CrRh_3$, $Co_3Rh$, IrMn, and IrSc) calculated as the candidate catalysts. Hence, it may be regarded that the $NH_3$ synthesis rate is also increased by the 25 kinds of catalysts, similar to the 5 kinds of catalysts described above.

Accordingly, it may be regarded that all of the candidate catalysts have a $NH_3$ synthesis rate higher than or equal to that of any of the reference catalysts. Thus, it may be regarded that the catalysts selected by the method for selecting the catalyst described above can be used as $NH_3$ synthesis catalysts capable of efficiently producing the $NH_3$.

This application is based upon and claims priority to Japanese Patent Application No. 2022-107476, filed on July 4, 2022 before the Japan Patent Office, the entire contents of which are incorporated herein by reference.

DESCRIPTION OF REFERENCE NUMERALS

1: Catalyst selection system
10: Catalyst selection device
11: Descriptor selection unit

12: Map creation unit
13: Preparation unit
14: First calculation unit
15: First plotting unit
16: First screening unit
17: Second calculation unit
18: Second plotting unit
19: Second screening unit
21: Filtering unit
22: Output unit
20: Storage device
30: Machine learning potential
141, 171: First structure optimization unit
142, 172: Second structure optimization unit
143: First transition state energy acquisition unit
173: Second transition state energy acquisition unit

## Claims

**1.** An ammonia synthesis catalyst comprising:
one or more kinds of components selected from a group consisting of IrSc, $FePd_3$, $MnTc_3$, IrY, $CrPd_3$, $MnPd_3$, RhY, $Co_3Pt$, $CrPt_3$, $FeRh_3$, $CrRh_3$, $Ni_3Ti$, $Ir_3V$, $Pt_3Ti$, $Co_3Rh$, $Pd_3Ti$, $Ni_3Zr$, $Co_3W$, $NiPd_3$, $FeNi_3$, $Ir_3Mn$, IrMn, MnPt, $MnNi_3$, $Ir_3Re$, MnRh, $Pd_3V$, $MnPt_3$, $Rh_3V$, and $Rh_3Ti$.

**2.** An ammonia synthesis method comprising:
causing a gas including hydrogen and nitrogen to come into contact with the ammonia synthesis catalyst according to claim 1.

FIG.1

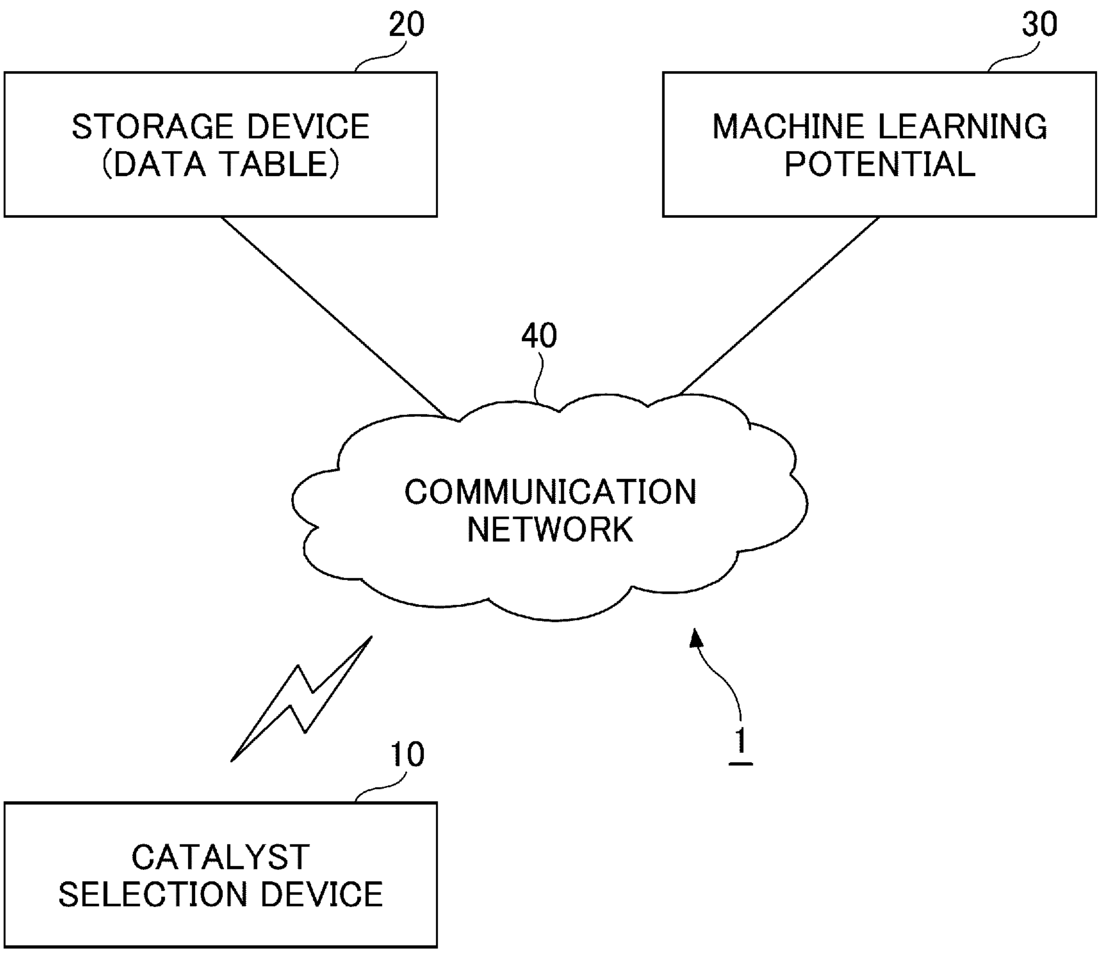
20
STORAGE DEVICE
(DATA TABLE)
30
MACHINE LEARNING
POTENTIAL
40
COMMUNICATION
NETWORK
10
CATALYST
SELECTION DEVICE
1

FIG.2

| DATA TABLE | | | | | | |
|---|---|---|---|---|---|---|
| No | CATALYST | | ADSORB-ENT | STRUCTURE OPTIMIZED USING MACHINE LEARNING POTENTIAL 30 | ENERGY [eV] OPTIMIZED USING MACHINE LEARNING POTENTIAL 30 | DEVIATION [eV] WITH RESPECT TO SCALING LINE |
| | CATALYST NAME (CATALYST COMPO-SITION) | CRYSTAL PLANE | | | | |
| 1 | CoRh | (111) | N* | INTERMEDIATE | −0.10 | − |
| 2 | CoRh | (211) | N* | INTERMEDIATE | −0.15 | − |
| 3 | CoRh | (111) | N−N* | TRANSITION STATE | −0.50 | 0.1 |
| 4 | CoRh | (211) | N−N* | TRANSITION STATE | 0.30 | 0.2 |
| ⋮ | ⋮ | ⋮ | ⋮ | ⋮ | ⋮ | ⋮ |

FIG.3

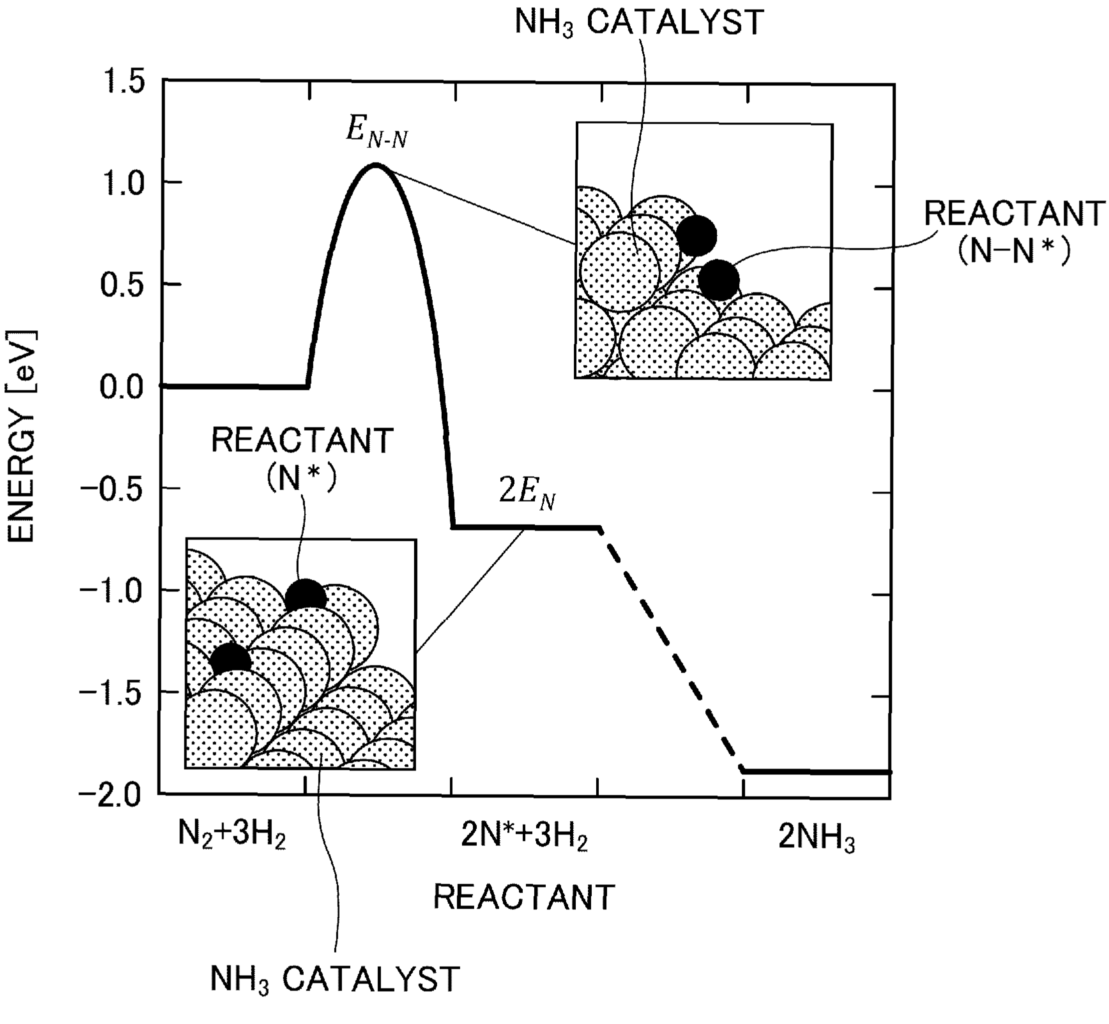
NH3 CATALYST
1.5
1.0
0.5
0.0
−0.5
−1.0
−1.5
−2.0
ENERGY [eV]
E N-N
REACTANT
(N–N*)
REACTANT
(N*)
2E N
N2+3H2
2N*+3H2
2NH3
REACTANT
NH3 CATALYST

FIG.4

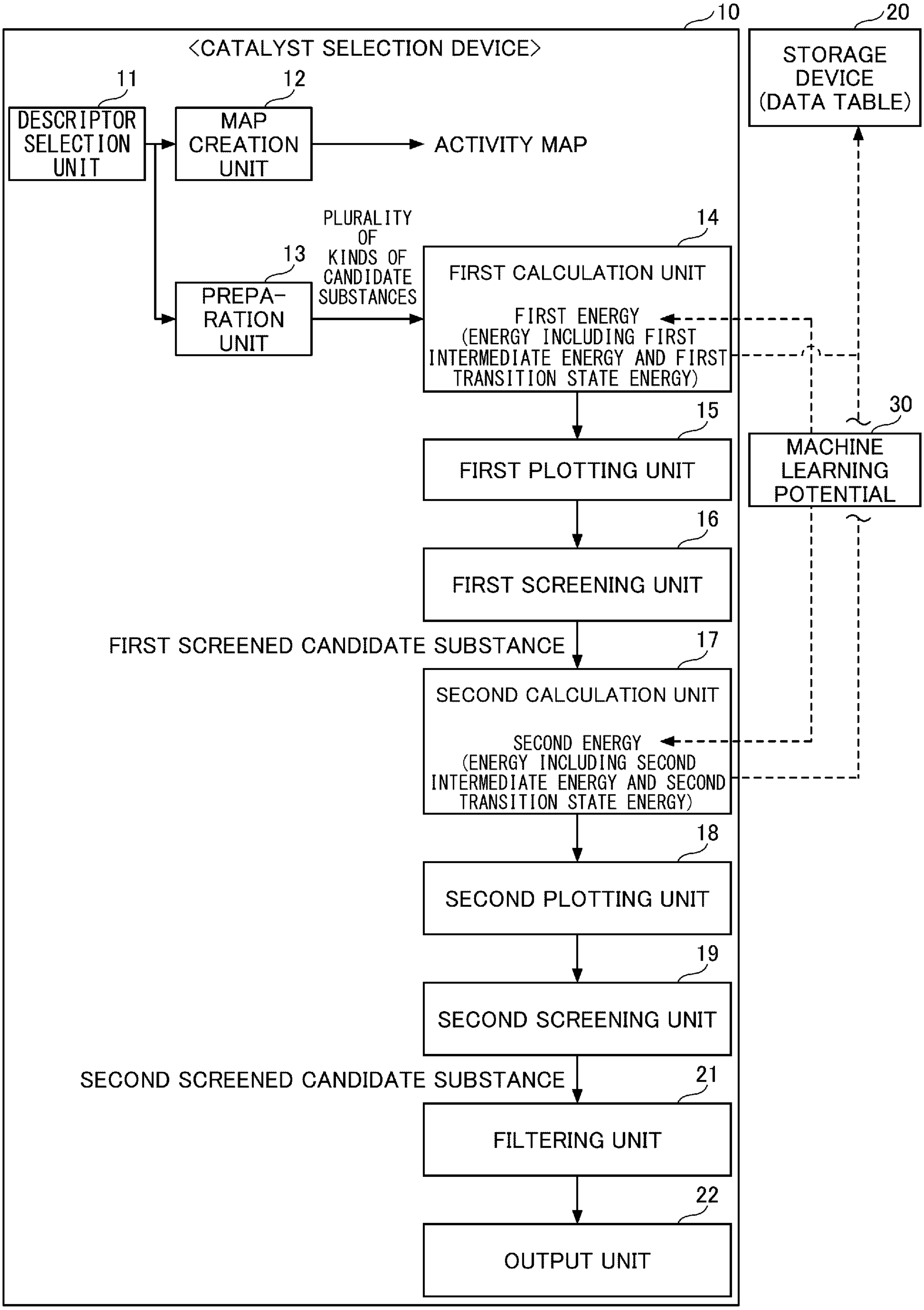
10
<CATALYST SELECTION DEVICE>
11
DESCRIPTOR SELECTION UNIT
12
MAP CREATION UNIT
ACTIVITY MAP
13
PREPA-RATION UNIT
PLURALITY OF KINDS OF CANDIDATE SUBSTANCES
14
FIRST CALCULATION UNIT
FIRST ENERGY (ENERGY INCLUDING FIRST INTERMEDIATE ENERGY AND FIRST TRANSITION STATE ENERGY)
15
FIRST PLOTTING UNIT
16
FIRST SCREENING UNIT
FIRST SCREENED CANDIDATE SUBSTANCE
17
SECOND CALCULATION UNIT
SECOND ENERGY (ENERGY INCLUDING SECOND INTERMEDIATE ENERGY AND SECOND TRANSITION STATE ENERGY)
18
SECOND PLOTTING UNIT
19
SECOND SCREENING UNIT
SECOND SCREENED CANDIDATE SUBSTANCE
21
FILTERING UNIT
22
OUTPUT UNIT
20
STORAGE DEVICE (DATA TABLE)
30
MACHINE LEARNING POTENTIAL

FIG.5

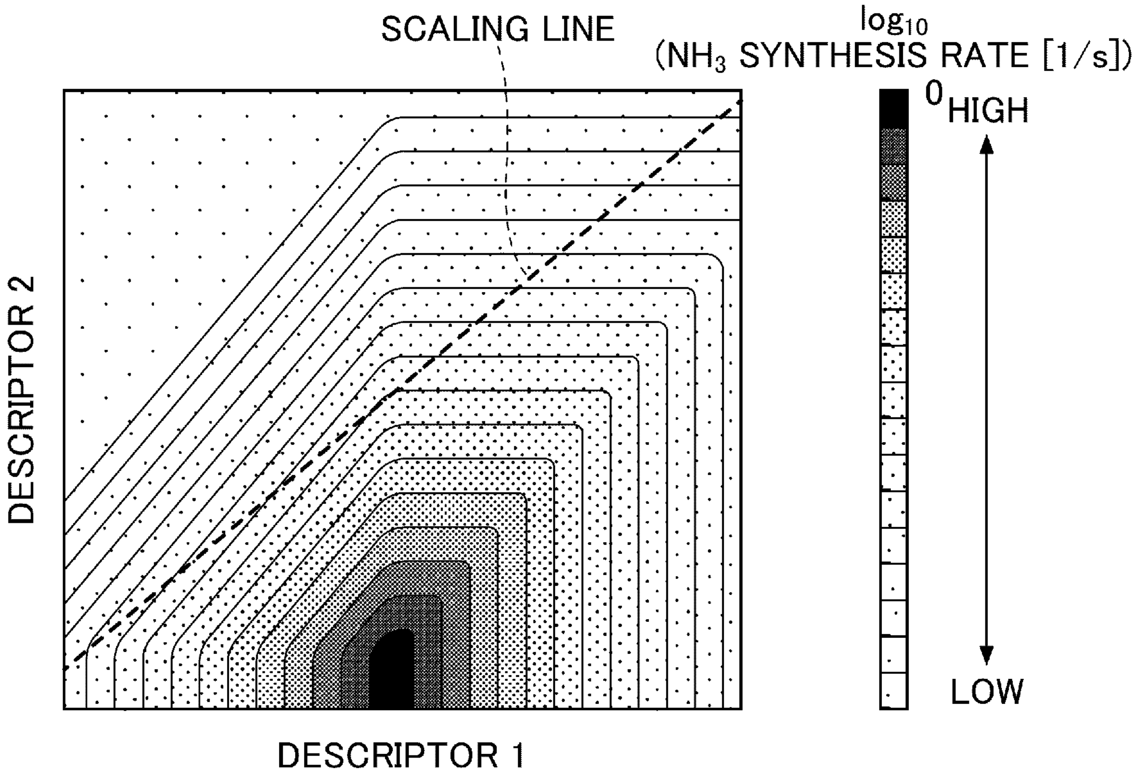
SCALING LINE
log10
(NH3 SYNTHESIS RATE [1/s])
0
HIGH
LOW
DESCRIPTOR 2
DESCRIPTOR 1

# FIG.6

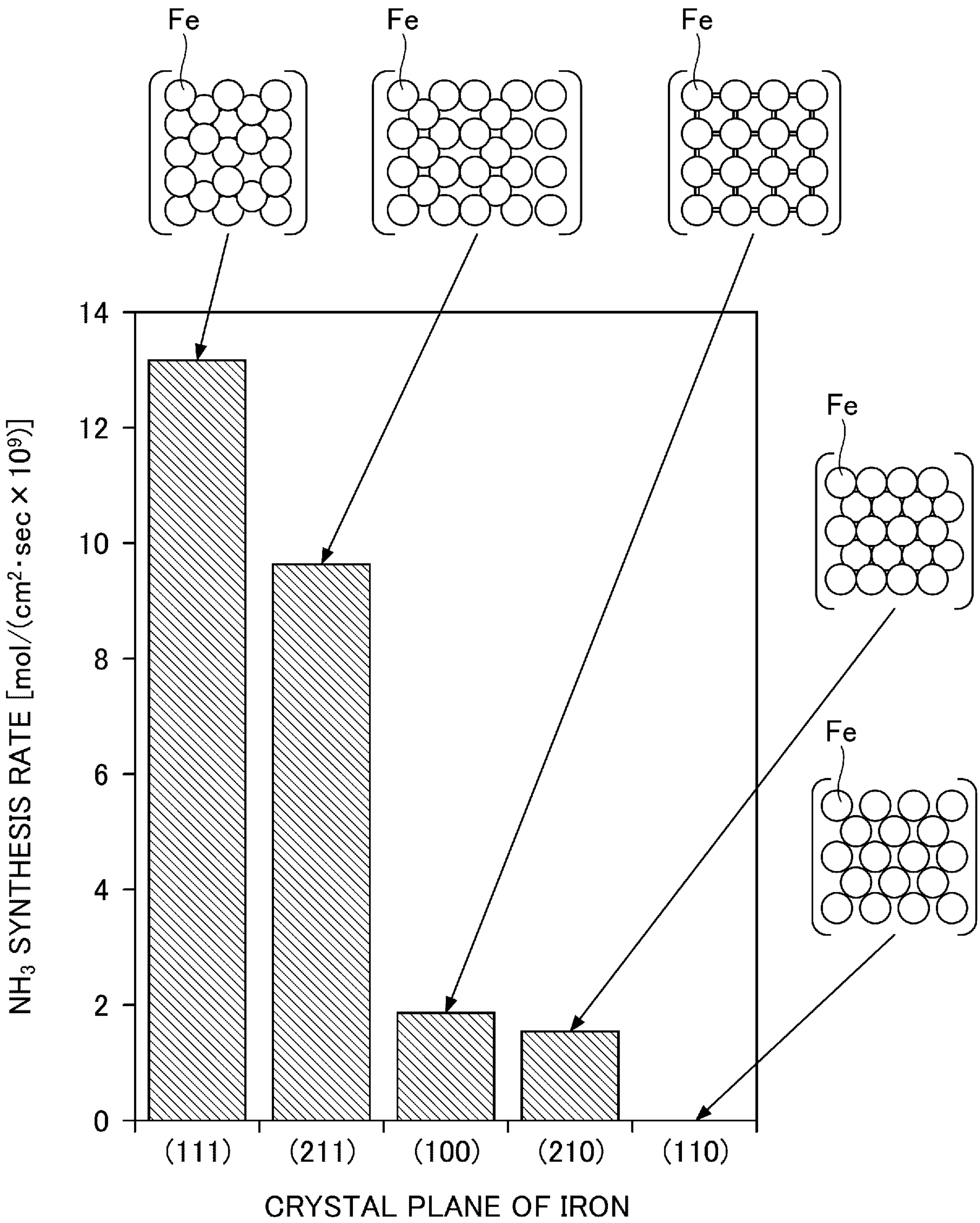
Fe
Fe
Fe
Fe
Fe
14
12
10
8
6
4
2
0
$NH_3$ SYNTHESIS RATE [mol/(cm$^2$·sec × 10$^9$)]
(111)
(211)
(100)
(210)
(110)
CRYSTAL PLANE OF IRON

FIG.7

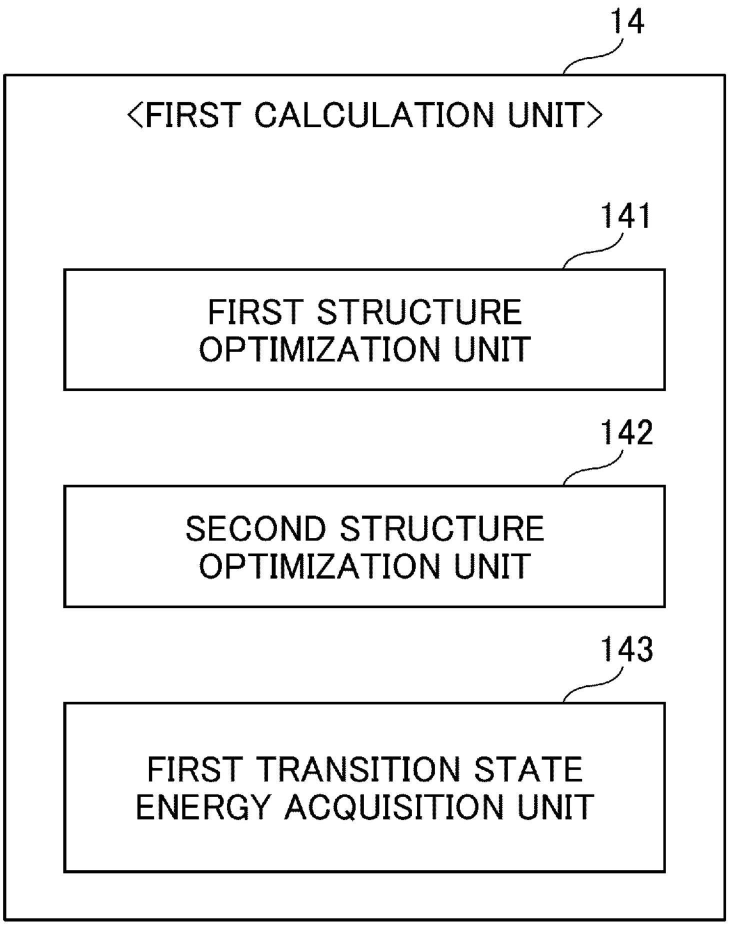
14
<FIRST CALCULATION UNIT>
141
FIRST STRUCTURE OPTIMIZATION UNIT
142
SECOND STRUCTURE OPTIMIZATION UNIT
143
FIRST TRANSITION STATE ENERGY ACQUISITION UNIT

# FIG.8

DATA TABLE

| No | CATALYST | | ADSORBENT | STRUCTURE OPTIMIZED USING MACHINE LEARNING POTENTIAL 30 | ENERGY [eV] OPTIMIZED USING MACHINE LEARNING POTENTIAL 30 | DEVIATION [eV] WITH RESPECT TO SCALING LINE |
|---|---|---|---|---|---|---|
| | CATALYST NAME (CATALYST COMPOSITION) | CRYSTAL PLANE | | | | |
| 1 | CATALYST 1 | (111) | N* | INTERMEDIATE | 0.05 | – |
| 2 | CATALYST 1 | (211) | N* | INTERMEDIATE | 0.10 | – |
| 3 | CATALYST 1 | (111) | N-N* | TRANSITION STATE | -0.15 | 3.0 |
| ⋮ | ⋮ | ⋮ | ⋮ | ⋮ | ⋮ | ⋮ |
| N | CATALYST N | (111) | N-N* | TRANSITION STATE | 0.07 | 1.2 |

DATA TABLE

| No | CATALYST | | ADSORBENT | STRUCTURE OPTIMIZED USING MACHINE LEARNING POTENTIAL 30 | ENERGY [eV] OPTIMIZED USING MACHINE LEARNING POTENTIAL 30 | DEVIATION [eV] WITH RESPECT TO SCALING LINE |
|---|---|---|---|---|---|---|
| | CATALYST NAME (CATALYST COMPOSITION) | CRYSTAL PLANE | | | | |
| N | CATALYST N | (111) | N-N* | TRANSITION STATE | 0.07 | 1.2 |
| 5 | CATALYST 2 | (111) | N-N* | TRANSITION STATE | 0.09 | 1.0 |
| ⋮ | ⋮ | ⋮ | ⋮ | ⋮ | ⋮ | ⋮ |
| ⋮ | ⋮ | ⋮ | ⋮ | ⋮ | ⋮ | ⋮ |
| 12 | CATALYST 3 | (111) | N-N* | TRANSITION STATE | 0.50 | 0.1 |

FIRST SCREENED CANDIDATE SUBSTANCE

THRESHOLD VALUE OF HIGH ACTIVITY REGION

FIG.9

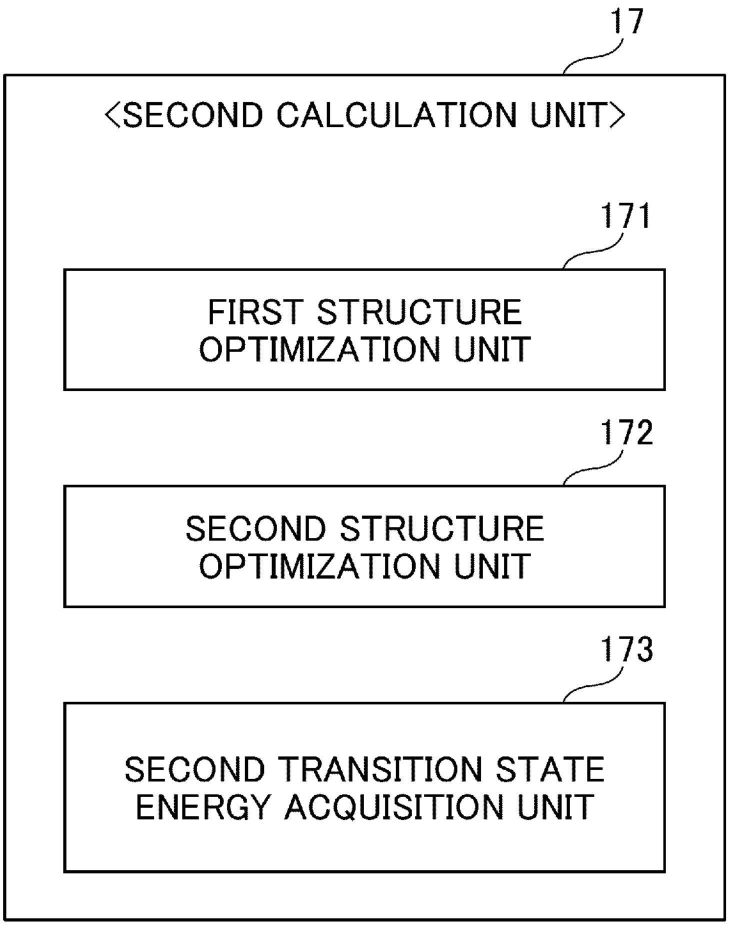
17
<SECOND CALCULATION UNIT>
171
FIRST STRUCTURE OPTIMIZATION UNIT
172
SECOND STRUCTURE OPTIMIZATION UNIT
173
SECOND TRANSITION STATE ENERGY ACQUISITION UNIT

FIG.10

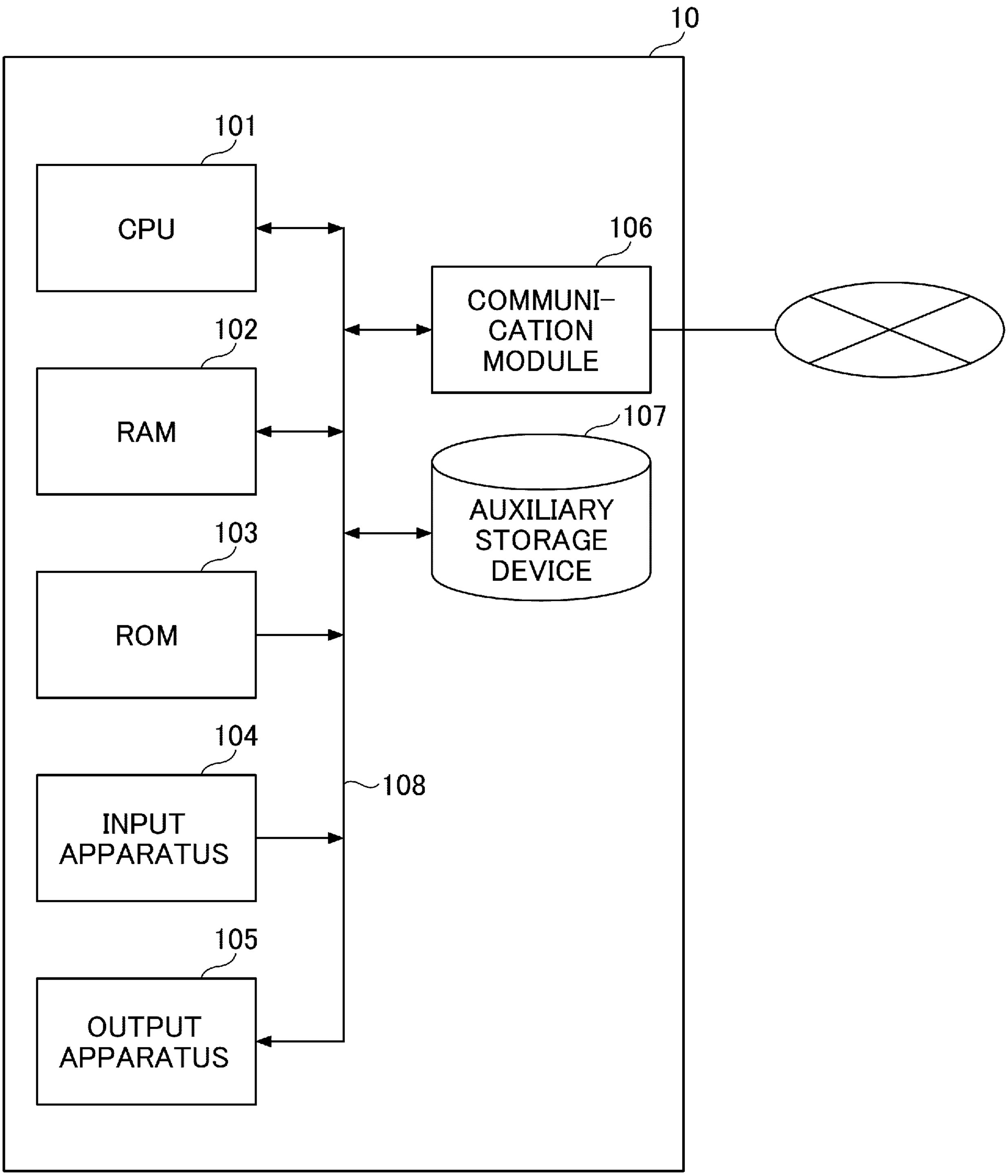
10
101
CPU
102
RAM
103
ROM
104
INPUT APPARATUS
105
OUTPUT APPARATUS
106
COMMUNI-CATION MODULE
107
AUXILIARY STORAGE DEVICE
108

FIG.11

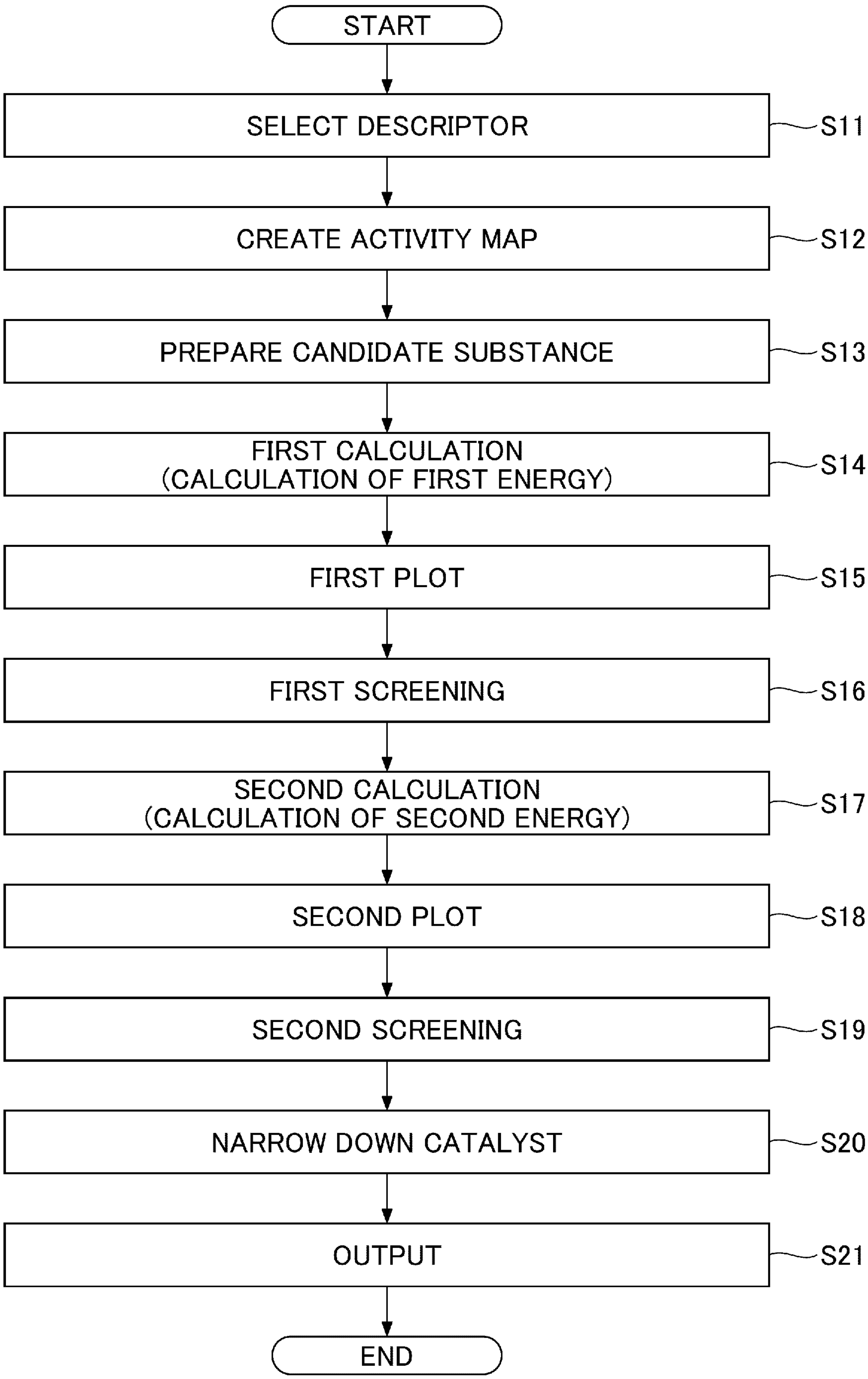
START
SELECT DESCRIPTOR
S11
CREATE ACTIVITY MAP
S12
PREPARE CANDIDATE SUBSTANCE
S13
FIRST CALCULATION
(CALCULATION OF FIRST ENERGY)
S14
FIRST PLOT
S15
FIRST SCREENING
S16
SECOND CALCULATION
(CALCULATION OF SECOND ENERGY)
S17
SECOND PLOT
S18
SECOND SCREENING
S19
NARROW DOWN CATALYST
S20
OUTPUT
S21
END

FIG.12

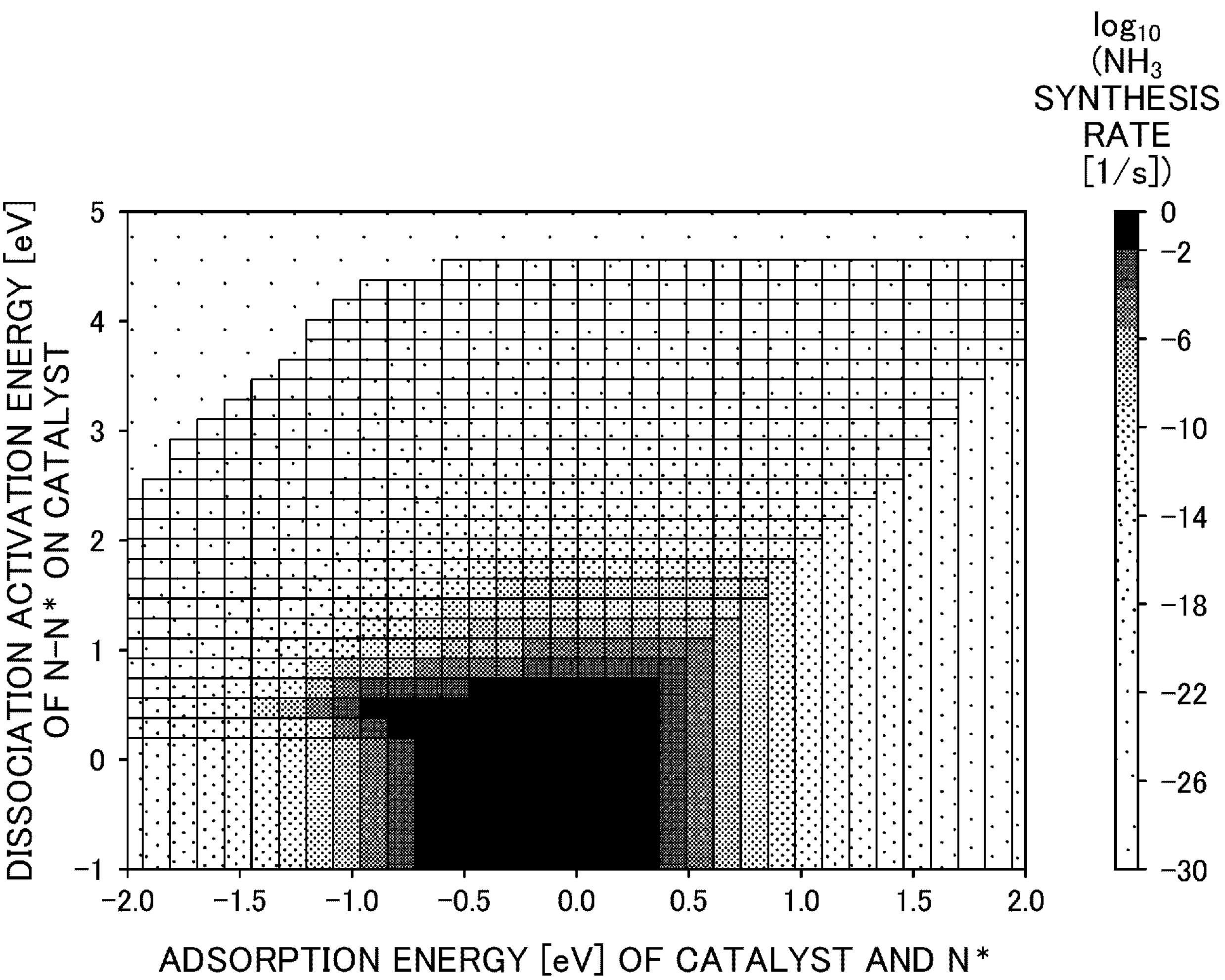
log10 (NH3 SYNTHESIS RATE [1/s])
0
−2
−6
−10
−14
−18
−22
−26
−30
DISSOCIATION ACTIVATION ENERGY [eV] OF N-N* ON CATALYST
5
4
3
2
1
0
−1
−2.0
−1.5
−1.0
−0.5
0.0
0.5
1.0
1.5
2.0
ADSORPTION ENERGY [eV] OF CATALYST AND N*

FIG.13

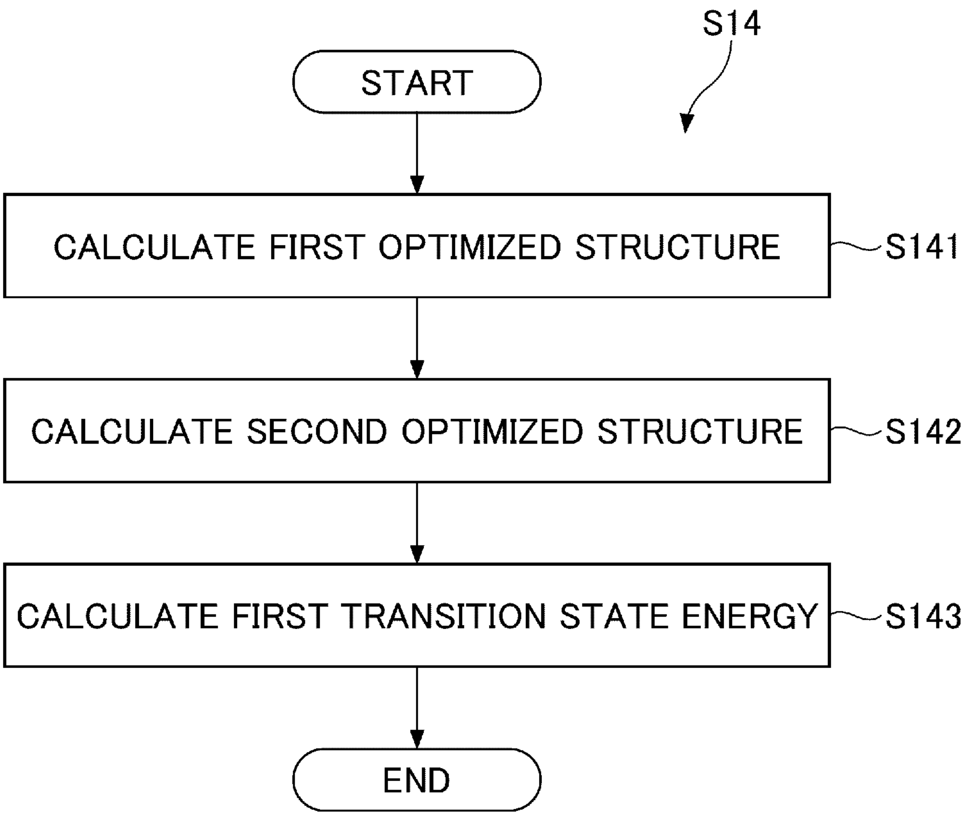
S14
START
CALCULATE FIRST OPTIMIZED STRUCTURE
S141
CALCULATE SECOND OPTIMIZED STRUCTURE
S142
CALCULATE FIRST TRANSITION STATE ENERGY
S143
END

# FIG.14

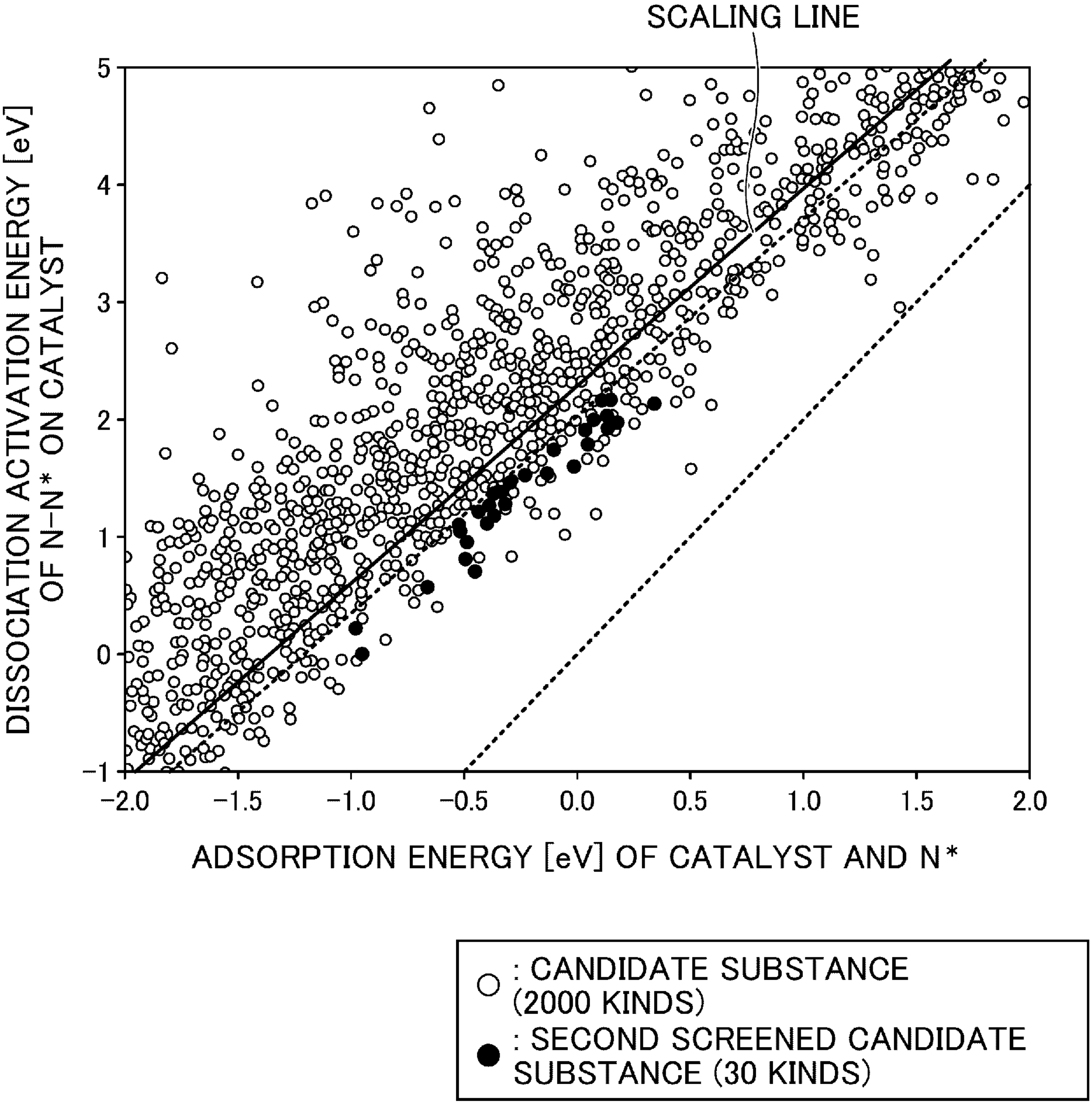
SCALING LINE
5
4
3
2
1
0
−1
−2.0
−1.5
−1.0
−0.5
0.0
0.5
1.0
1.5
2.0
DISSOCIATION ACTIVATION ENERGY [eV] OF N-N* ON CATALYST
ADSORPTION ENERGY [eV] OF CATALYST AND N*
○ : CANDIDATE SUBSTANCE (2000 KINDS)
● : SECOND SCREENED CANDIDATE SUBSTANCE (30 KINDS)

FIG.15

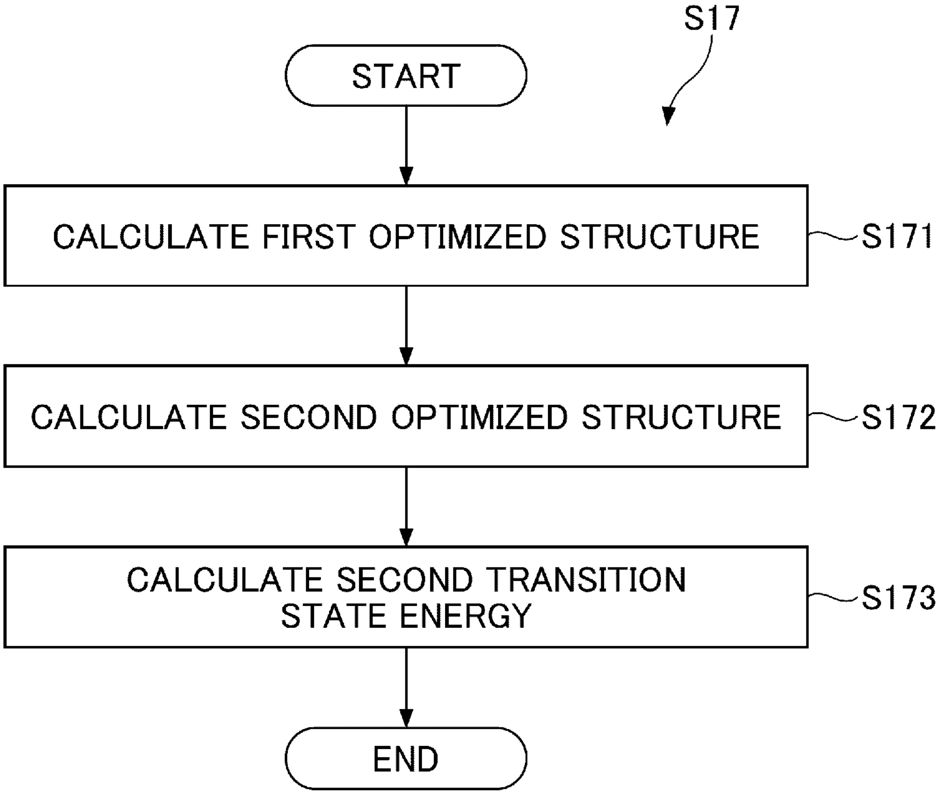
S17
START
CALCULATE FIRST OPTIMIZED STRUCTURE
S171
CALCULATE SECOND OPTIMIZED STRUCTURE
S172
CALCULATE SECOND TRANSITION STATE ENERGY
S173
END

FIG.16

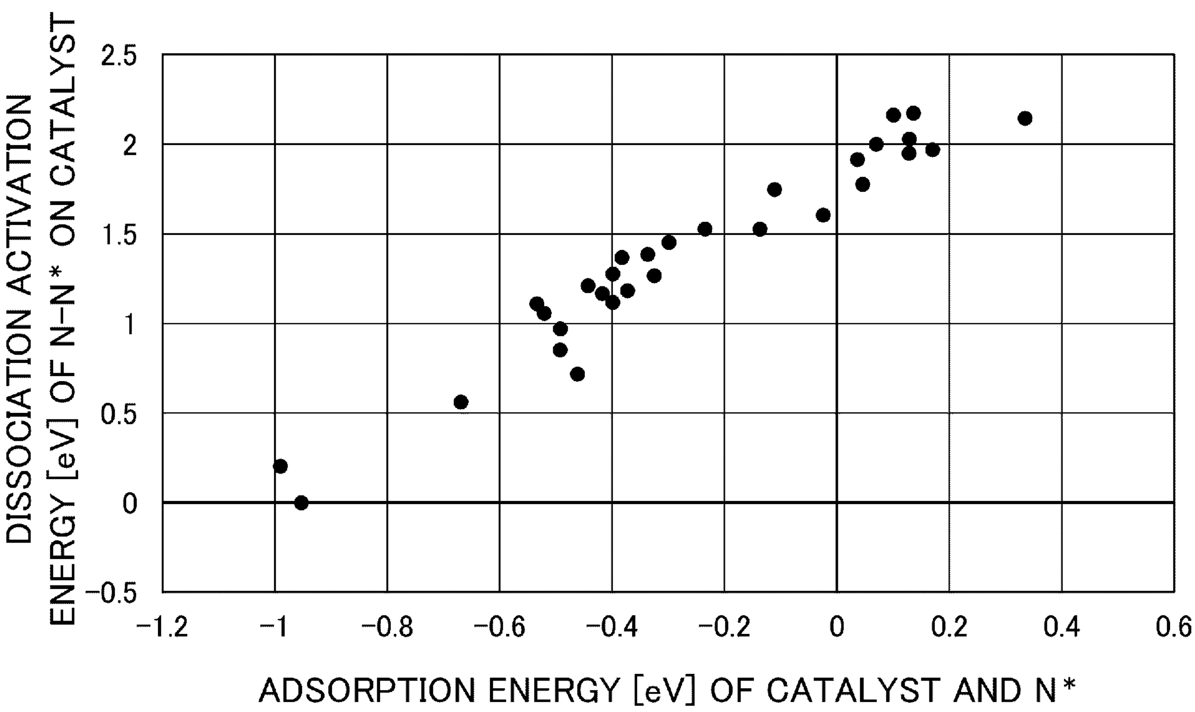
DISSOCIATION ACTIVATION ENERGY [eV] OF N-N* ON CATALYST
2.5
2
1.5
1
0.5
0
−0.5
−1.2
−1
−0.8
−0.6
−0.4
−0.2
0
0.2
0.4
0.6
ADSORPTION ENERGY [eV] OF CATALYST AND N*

FIG.17

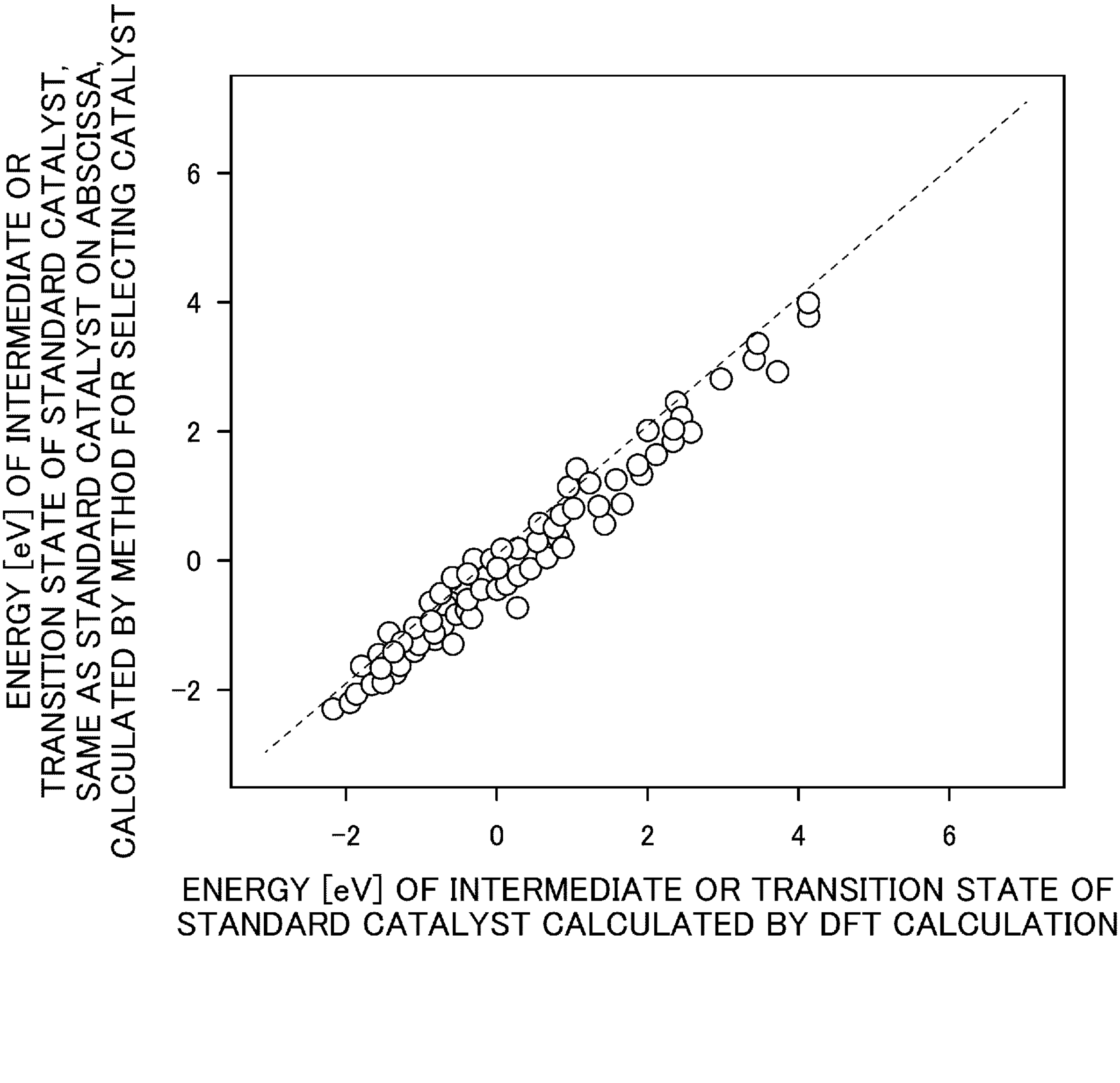
ENERGY [eV] OF INTERMEDIATE OR TRANSITION STATE OF STANDARD CATALYST, SAME AS STANDARD CATALYST ON ABSCISSA, CALCULATED BY METHOD FOR SELECTING CATALYST
6
4
2
0
−2
−2
0
2
4
6
ENERGY [eV] OF INTERMEDIATE OR TRANSITION STATE OF STANDARD CATALYST CALCULATED BY DFT CALCULATION

FIG.18

(a)

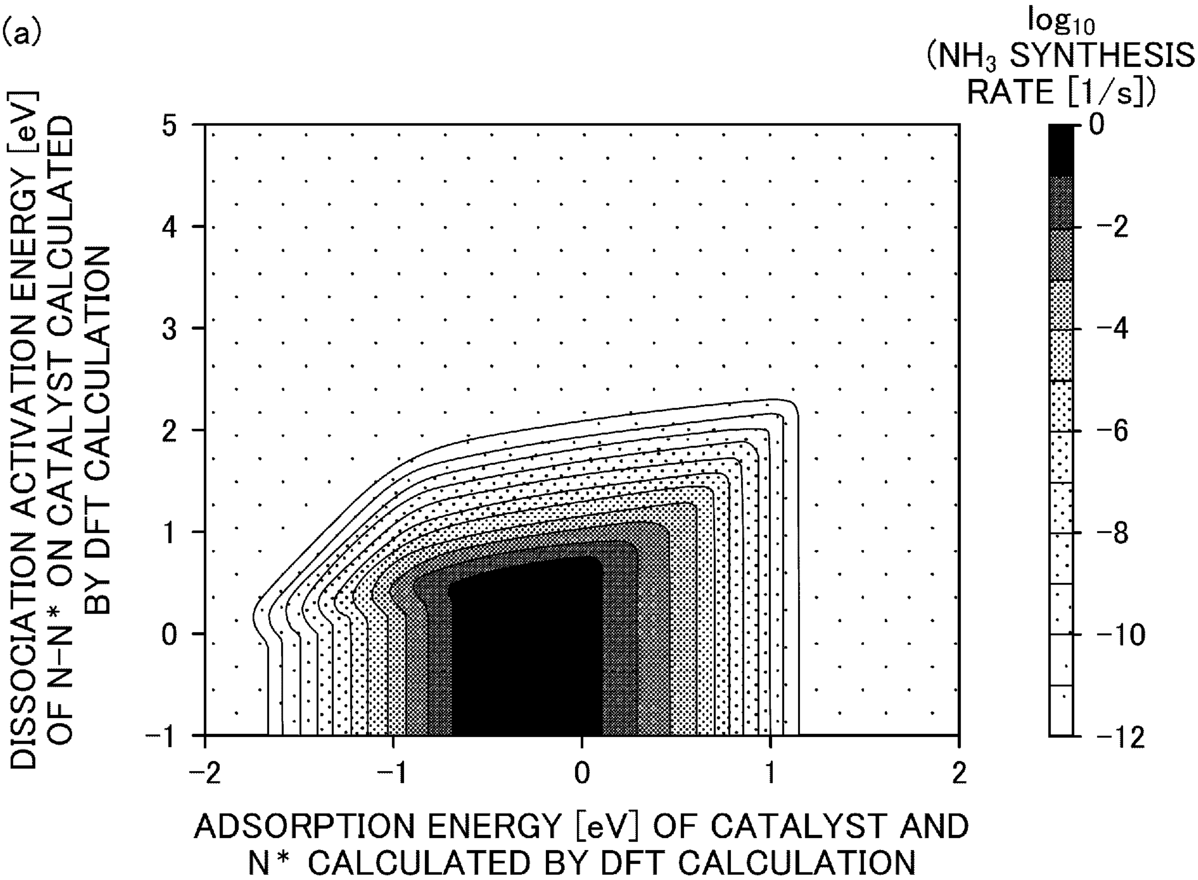
log10
(NH3 SYNTHESIS
RATE [1/s])
0
−2
−4
−6
−8
−10
−12
5
4
3
2
1
0
−1
−2
−1
0
1
2
DISSOCIATION ACTIVATION ENERGY [eV]
OF N-N* ON CATALYST CALCULATED
BY DFT CALCULATION
ADSORPTION ENERGY [eV] OF CATALYST AND
N* CALCULATED BY DFT CALCULATION

(b)

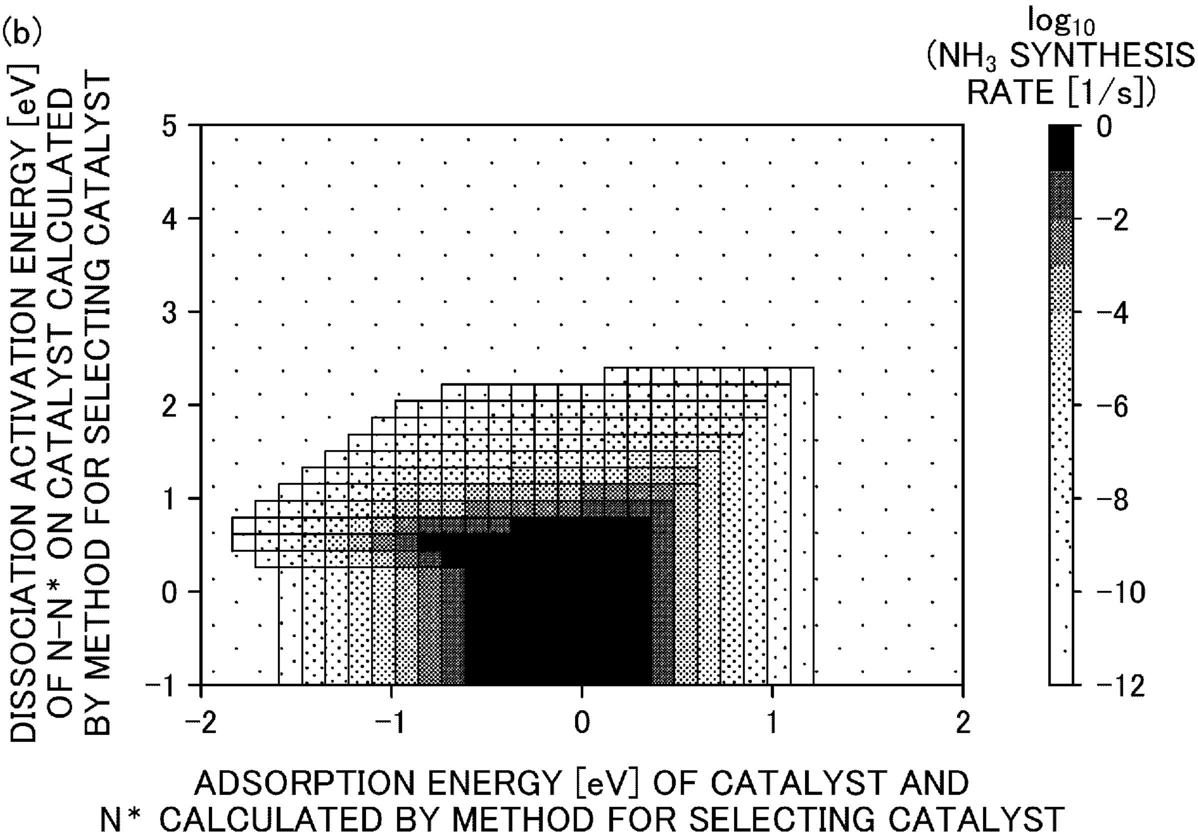
log10
(NH3 SYNTHESIS
RATE [1/s])
0
−2
−4
−6
−8
−10
−12
5
4
3
2
1
0
−1
−2
−1
0
1
2
DISSOCIATION ACTIVATION ENERGY [eV]
OF N-N* ON CATALYST CALCULATED
BY METHOD FOR SELECTING CATALYST
ADSORPTION ENERGY [eV] OF CATALYST AND
N* CALCULATED BY METHOD FOR SELECTING CATALYST

# FIG.19

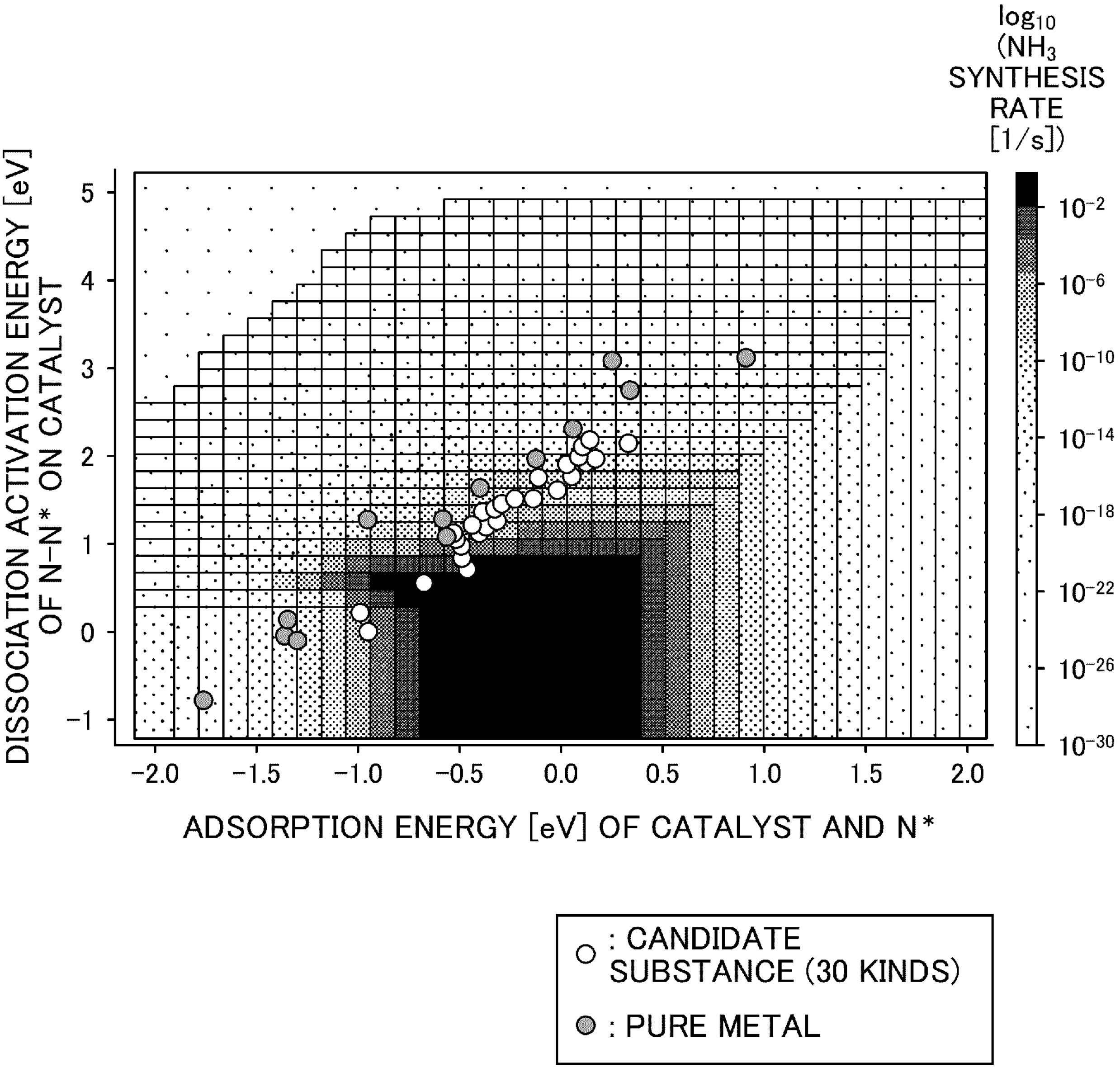

log10 (NH3 SYNTHESIS RATE [1/s])
10-2
10-6
10-10
10-14
10-18
10-22
10-26
10-30
DISSOCIATION ACTIVATION ENERGY [eV] OF N-N* ON CATALYST
5
4
3
2
1
0
−1
−2.0
−1.5
−1.0
−0.5
0.0
0.5
1.0
1.5
2.0
ADSORPTION ENERGY [eV] OF CATALYST AND N*
: CANDIDATE SUBSTANCE (30 KINDS)
: PURE METAL

# FIG.20

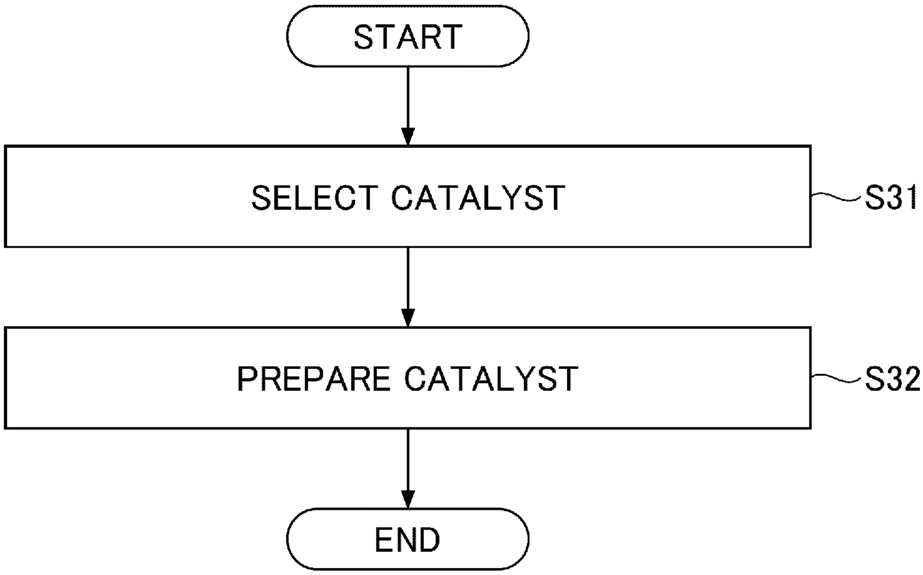
START
SELECT CATALYST
S31
PREPARE CATALYST
S32
END

# FIG.21

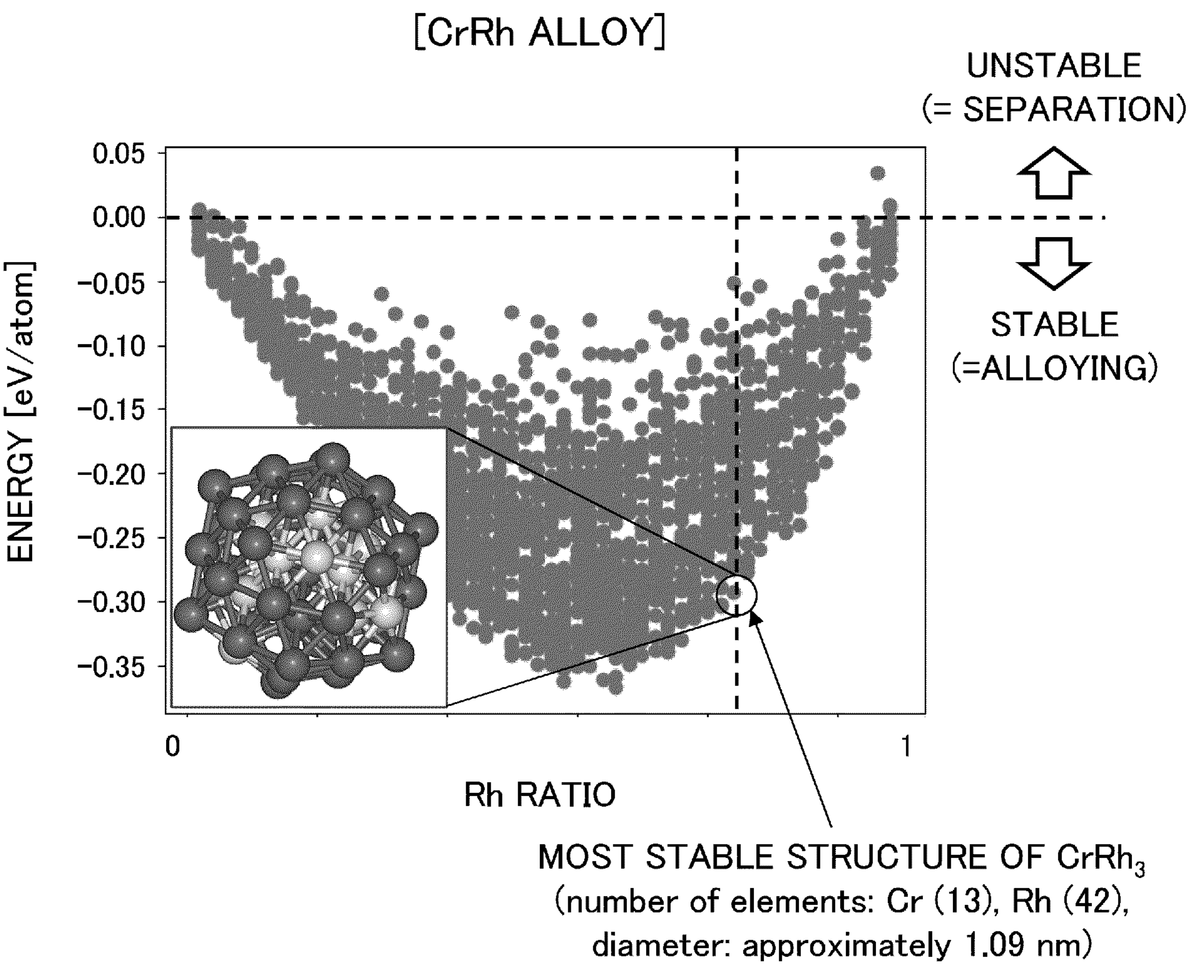
[CrRh ALLOY]
UNSTABLE
(= SEPARATION)
STABLE
(=ALLOYING)
0.05
0.00
−0.05
−0.10
−0.15
−0.20
−0.25
−0.30
−0.35
ENERGY [eV/atom]
0
1
Rh RATIO
MOST STABLE STRUCTURE OF $CrRh_3$
(number of elements: Cr (13), Rh (42),
diameter: approximately 1.09 nm)

# FIG.22

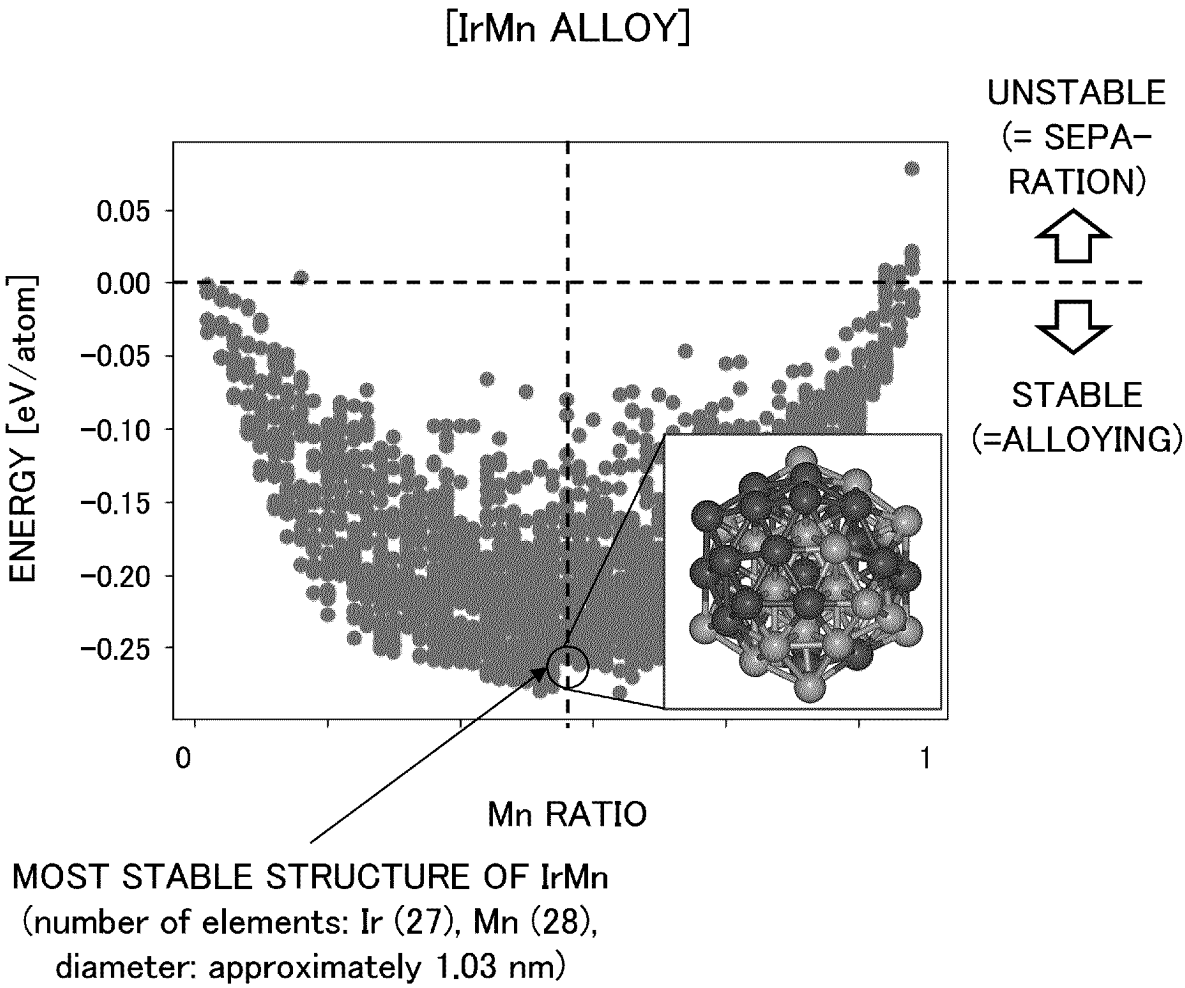
[IrMn ALLOY]
UNSTABLE
(= SEPA-
RATION)
STABLE
(=ALLOYING)
0.05
0.00
−0.05
−0.10
−0.15
−0.20
−0.25
ENERGY [eV/atom]
0
1
Mn RATIO
MOST STABLE STRUCTURE OF IrMn
(number of elements: Ir (27), Mn (28),
diameter: approximately 1.03 nm)

# FIG.23

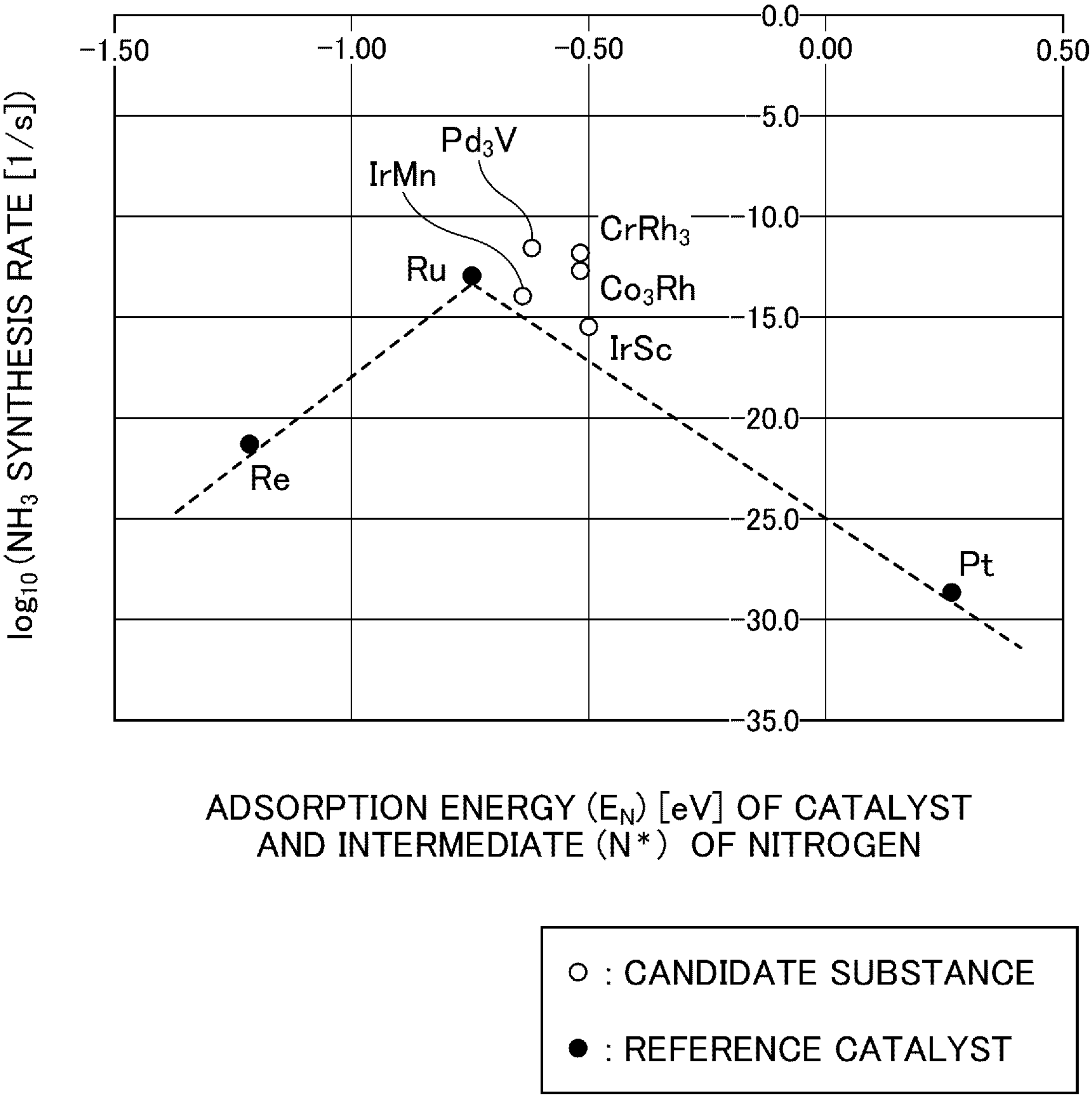

−1.50
−1.00
−0.50
0.00
0.50
0.0
−5.0
−10.0
−15.0
−20.0
−25.0
−30.0
−35.0
log10(NH3 SYNTHESIS RATE [1/s])
Pd3V
IrMn
CrRh3
Ru
Co3Rh
IrSc
Re
Pt
ADSORPTION ENERGY (EN) [eV] OF CATALYST
AND INTERMEDIATE (N*) OF NITROGEN
○ : CANDIDATE SUBSTANCE
● : REFERENCE CATALYST

FIG.24

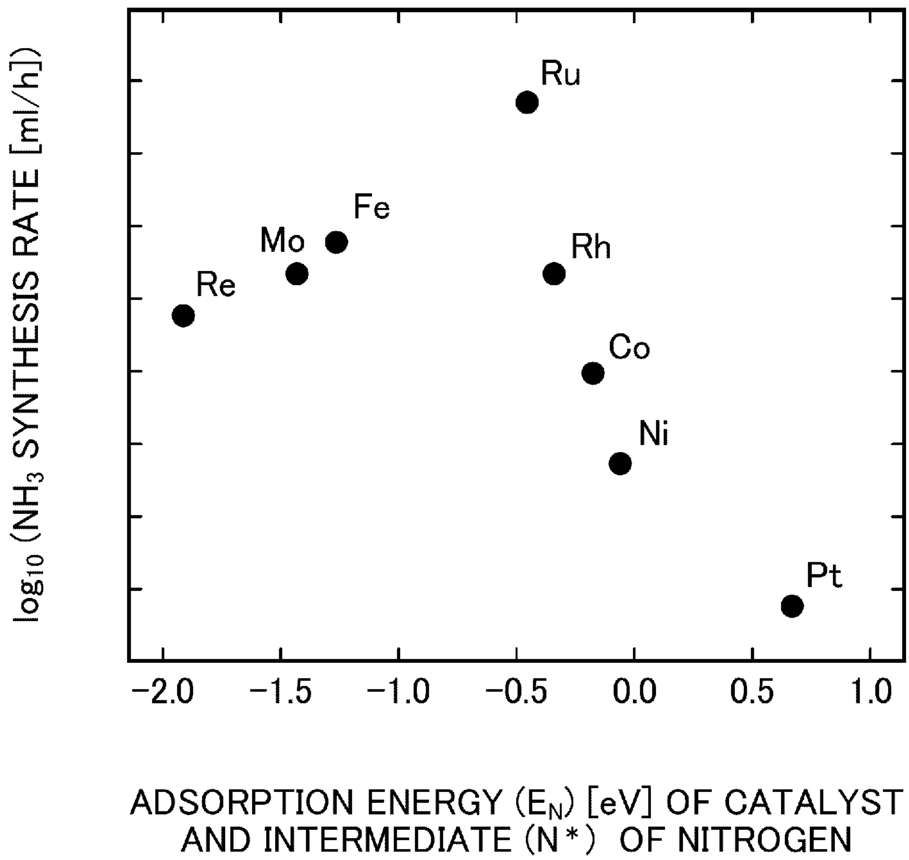

log10 (NH3 SYNTHESIS RATE [ml/h])
Ru
Fe
Mo
Rh
Re
Co
Ni
Pt
−2.0
−1.5
−1.0
−0.5
0.0
0.5
1.0
ADSORPTION ENERGY (EN) [eV] OF CATALYST AND INTERMEDIATE (N*) OF NITROGEN

**INTERNATIONAL SEARCH REPORT**

International application No.
**PCT/JP2023/024491**

**A. CLASSIFICATION OF SUBJECT MATTER**

***B01J 23/63***(2006.01)i; ***B01J 23/34***(2006.01)i; ***B01J 23/42***(2006.01)i; ***B01J 23/44***(2006.01)i; ***B01J 23/46***(2006.01)i; ***B01J 23/648***(2006.01)i; ***B01J 23/652***(2006.01)i; ***B01J 23/656***(2006.01)i; ***B01J 23/755***(2006.01)i; ***B01J 23/888***(2006.01)i; ***B01J 23/889***(2006.01)i; ***B01J 23/89***(2006.01)i; ***C01C 1/04***(2006.01)i

FI: B01J23/63 M; C01C1/04 E; B01J23/89 M; B01J23/34 M; B01J23/652 M; B01J23/656 M; B01J23/755 M; B01J23/648 M; B01J23/42 M; B01J23/44 M; B01J23/888 M; B01J23/889 M; B01J23/46 311M

According to International Patent Classification (IPC) or to both national classification and IPC

**B. FIELDS SEARCHED**

Minimum documentation searched (classification system followed by classification symbols)

B01J21/00-38/74; C01C1/00-1/28; C40B20/00-30/00; C40B30/04-30/10; C40B60/04; C40B60/10-60/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII); CAplus/REGISTRY (STN); Scopus

**C. DOCUMENTS CONSIDERED TO BE RELEVANT**

| Category* | Citation of document, with indication, where appropriate, of the relevant passages | Relevant to claim No. |
|---|---|---|
| X | MA, Xuelu et al. Surface Single-Cluster Catalyst for N2-to-NH3 Thermal Conversion. J. Am. Chem. Soc. 15 December 2017, vol. 140, no. 1, pp. 46-49, DOI: 10.1021/jacs.7b10354<br>abstract, p. 47, left column, line 17 to p. 49, left column, line 2 | 1-2 |
| A | JP 2000-264625 A (HALDOR TOPSOE AS) 26 September 2000 (2000-09-26)<br>entire text | 1-2 |
| A | JP 49-014632 B1 (SAGAMI CHEMICAL RESEARCH CENTER) 09 April 1974 (1974-04-09)<br>entire text | 1-2 |
| A | WO 2018/221699 A1 (FURUKAWA ELECTRIC CO LTD) 06 December 2018 (2018-12-06)<br>entire text | 1-2 |
| A | JP 2014-151290 A (DENSO CORP) 25 August 2014 (2014-08-25)<br>entire text | 1-2 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 September 2023** | **19 September 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/024491**

**C. DOCUMENTS CONSIDERED TO BE RELEVANT**

| Category* | Citation of document, with indication, where appropriate, of the relevant passages | Relevant to claim No. |
|---|---|---|
| A | JP 2020-533491 A (HASKOLI ISLANDS) 19 November 2020 (2020-11-19) entire text | 1-2 |

Form PCT/ISA/210 (second sheet) (January 2015)

**INTERNATIONAL SEARCH REPORT**
**Information on patent family members**

International application No.
**PCT/JP2023/024491**

| Patent document cited in search report | Publication date (day/month/year) | Patent family member(s) | Publication date (day/month/year) |
|---|---|---|---|
| JP 2000-264625 A | 26 September 2000 | (Family: none) | |
| JP 49-014632 B1 | 09 April 1974 | US 3830753 A<br>whole document<br>GB 1367112 A<br>DE 2114769 A<br>FR 2112957 A<br>NL 7112535 A<br>IT 939812 B | |
| WO 2018/221699 A1 | 06 December 2018 | EP 3632552 A1<br>whole document<br>CN 110691647 A | |
| JP 2014-151290 A | 25 August 2014 | US 2014/0228199 A1<br>whole document | |
| JP 2020-533491 A | 19 November 2020 | WO 2019/053749 A1<br>whole document<br>EP 3679174 A1<br>KR 10-2020-0049825 A<br>CN 111094629 A<br>AU 2018332238 A<br>CA 3074963 A<br>IL 273018 A<br>BR 112020004397 A<br>MA 50083 A<br>RU 2020111951 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016155123 A
- JP 2022107476 A


### Non-patent literature cited in the description


- **MAMUN, O et al.** *Sci Data*, 2019, vol. 6, 76
- **ANDREW J. MEDFORD et al.** From the Sabatier principle to a predictive theory of transition-metal heterogeneous catalysis. *Journal of Catalysis*, August 2015, vol. 328, 36-42